(19) Europäisches Patentamt
European Patent Office
Office européen des brevets

(11) EP 2 899 420 B1

(12) EUROPEAN PATENT SPECIFICATION

(45) Date of publication and mention of the grant of the patent: **15.03.2017 Bulletin 2017/11**

(51) Int Cl.:
***F16D 23/12*** *(2006.01)* ***F16D 28/00*** *(2006.01)*
*F16D 13/56* *(2006.01)*

(21) Application number: **14187270.5**

(22) Date of filing: **01.10.2014**

# (54) Clutch device and straddle-type vehicle

Kupplungsvorrichtung und Sattelfahrzeug

Dispositif d'embrayage et véhicule de type à enfourcher

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2013 JP 2013206826**

(43) Date of publication of application:
**29.07.2015 Bulletin 2015/31**

(73) Proprietor: **Yamaha Hatsudoki Kabushiki Kaisha**
**Iwata-shi, Shizuoka 438-8501 (JP)**

(72) Inventor: **Minami, Kengo**
**Iwata-shi, Shizuoka 438-8501 (JP)**

(74) Representative: **Grünecker Patent- und Rechtsanwälte**
**PartG mbB**
**Leopoldstraße 4**
**80802 München (DE)**

(56) References cited:
**EP-A2- 2 695 788**
**JP-A- 2005 067 450**
**US-A1- 2003 094 328**
**US-A1- 2005 072 648**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 899 420 B1

## Description

This invention relates to a clutch device according to the preamble of independent claim 1 and method for controlling a clutch device according to the preamble of independent claim 13. Such a clutch device and such a method for controlling a clutch device can be taken from the prior art document US 2005/0072648 A1.

Some of friction clutches used in vehicles such as motorcycles include pressure members movable along shafts and press friction members by the pressure members. The clutch is engaged when the friction member is pressed by the pressure member and the clutch is not engaged when the pressure member is separated from the friction member. In related art, there have been clutch devices that move pressure members by using actuators (for example, International Publication WO2006/004008).

If torque required to an actuator (e.g., electric motor) for operating a pressure member is reduced, the actuator can be downsized. An object of the invention is to provide a clutch device and a method for controlling a clutch device that can reduce torque required to an actuator for operating a pressure member of a clutch.

According to the present invention said object is solved by a clutch device having the features of independent claim 1. Moreover, according to the present invention said object is solved by a method for controlling a clutch device having the features of independent claim 13. Preferred embodiments are laid down in the dependent claims.

(1) Accordingly, it is provided a clutch device that includes a clutch (30) including a friction member (34) and a pressure member (33) for pressing the friction member, the pressure member being movable to a contact start position where contact between the pressure member and the friction member is started and to an engagement position where the pressure member is pressed against the friction member and the clutch is engaged. The clutch device further includes a drive unit (10) that moves the pressure member. The drive unit includes an actuator (20), a first rotation shaft (1S, 11S) that rotates by power of the actuator, a first member (1Ar, 11Ar) that rotates together with the first rotation shaft around the first rotation shaft, a second rotation shaft (2S) that rotates together with the movement of the pressure member, a second member (2Ar) that rotates together with the second rotation shaft around the second rotation shaft, and a coupling member (R) that connects, and interlocks, the first member and the second member. The clutch is adapted so that a clutch reaction force defined as a force acting on the drive unit from the pressure member increases in a course in which the pressure member moves from one position to the other position of the contact start position and the engagement position, and the first member is placed in a first position (p1) when the pressure member is placed in the one position of the contact start position and the engagement position, and placed in a second position (p2) when the pressure member is placed in the other position of the contact start position and the engagement position. The first position and the second position are so that a lever ratio is larger when the first member is in the second position than when the first member is in the first position, wherein the lever ratio is defined as a ratio (rt) of torque (T2) of the second rotation shaft to torque (T1) of the first rotation shaft. According to the present teaching, torque of the actuator necessary for operating the pressure member can be reduced. The straddle-type vehicle is specifically a motorcycle (including a scooter), a snowmobile, a four-wheel rough terrain vehicle, or the like.

(2) In an embodiment, the first position (p1) and the second position (p2) may be set so that the lever ratio (tr) increases from the first position (p1) toward the second position (p2). According to the embodiment, as the clutch reaction force is larger, the lever ratio may be made larger.

(3) In an embodiment, when a plane (Ph) is defined as a plane containing an axis line of the first rotation shaft (1S, 11S) and a line orthogonal to both of the first rotation shaft (1S, 11S) and the second rotation shaft (2S), and an angle ($\theta\alpha$) between the plane (Ph) and the first member (1Ar, 11Ar) is defined as a first member angle, the first member angle ($\theta\alpha$) may be smaller when the first member (1Ar,11Ar) is in the second position (p2) than when the first member (1Ar, 11Ar) is in the first position (p1). According to the embodiment, the torque of the actuator necessary for operating the pressure member can be reduced.

(4) In an embodiment, the first position (p1) and the second position (p2) may be set so that the first member angle ($\theta\alpha$) decreases in a course in which the first member (1Ar, 11Ar) rotates from the first position (p1) toward the second position (p2). According to the embodiment, as the clutch reaction force is larger, the lever ratio can be increase.

(5) In an embodiment, the first rotation shaft (1S) and the second rotation shaft (2S) may be arranged so that axis lines thereof are in parallel to each other, and the first position (p1) and the second position (p2) may be set so that a difference ($\theta1+\theta x$) between an angle ($\theta k+\theta x$) of the coupling member (R) and a right angle is larger in the second position (p2) than in the first position (p1). The angle ($\theta k+\theta x$) of the coupling member (R) is defined as an angle of the coupling member (R) with respect to a line connecting the first rotation shaft (1S) to a connection portion between the first member (1Ar) and the coupling member (R). According to the embodiment, as the clutch reaction force is larger, the lever ratio can be increase.

(6) In an embodiment, the first rotation shaft (11S) and the second rotation shaft (2S) may be arranged so that a plane perpendicular to one rotation shaft of the first rotation shaft (11S) and the second rotation shaft (2S) is in parallel to an axis line of the other rotation shaft. Thereby, the layout according to the embodiment can have larger freedom in the manner of the change manner of the lever ratio (rt) with respect to the angle of the first member.

(7) In an embodiment, a distance from an axis line of the second rotation shaft (2S) to a connection portion between the coupling member (R) and the second member (2Ar) may be larger than a distance from an axis line of the first rotation shaft(1S, 11S) to a connection portion between the coupling member (R) and the first member (1Ar, 11Ar). According to the embodiment, the larger lever ratio can be easily obtained.

(8) In an embodiment, the clutch (30) may be configured such that the pressure member (33) moves in a direction away from the friction member (34) when the power of the actuator (20) acting on the pressure member(33) is reduced, and the clutch reaction force may increase in a course in where the pressure member (33) moves from the contact start position to the engagement position. According to the embodiment, when the clutch is engaged in a normal state in which the power of the actuator does not act on the pressure member is provided, the torque of the actuator necessary for operating the pressure member may be made smaller.

(9) In an embodiment, the clutch (30) may be configured such that the pressure member (33) moves toward the engagement position when the power of the actuator acting on the pressure member (33) is reduced, and the clutch reaction force may increase in a course in which the pressure member (33) moves from the engagement position to the contact start position. Thereby, power consumption of the actuator can be reduced.

(10) In an embodiment, the drive unit may further include a friction member (24) provided to at least one member of a rotation shaft (20a) of the actuator (20), a rotation member (21,22,23) that rotates together with the rotation shaft (20a) of the actuator (20), the first rotation shaft (1S, 11S), and the second rotation shaft (2S) for reducing rotation of the at least one member. Thereby, the pressure member can be easily maintained in the engagement position and the power consumption of the actuator can be reduced.

(11) In an embodiment, the friction member (24) may be provided on at least one of the rotation shaft (20a) of the actuator (20) and the rotation member (21,22,23) that rotates with the rotation shaft (20a) of the actuator (20). Accordingly, the rotation can be reduced by a relatively small friction force.

BRIEF DESCRIPTION OF THE DRAWINGS

Fig. 1 is a side view of a motorcycle including a clutch device according to an embodiment.

Fig. 2 is a sectional view of a clutch.

Fig. 3 shows relationships between a position of a pressure member and a clutch reaction force when a clutch device comprises a clutch including a clutch spring.

Fig. 4 shows a relationship between the position of the pressure member and the clutch reaction force when the clutch device comprises a clutch not including a clutch spring.

Fig. 5 is a schematic diagram showing an actuator unit and a link mechanism. In the drawing, a first rotation shaft and a second rotation shaft are arranged in parallel to each other.

Fig. 6 is a diagram for explanation of a lever ratio and explanation of transmission of a force from the first rotation shaft to the second rotation shaft.

Fig. 7 shows relationships between angle of a first arm and the lever ratio.

Figs. 8A and 8B are schematic diagrams showing the actuator unit and the link mechanism. In the drawings, the first rotation shaft and the second rotation shaft have a skew positional relationship.

Figs. 9A and 9B are diagrams for explanation of the lever ratio and explanation of transmission of the force from the first rotation shaft to the second rotation shaft in the example of Figs. 8A and 8B.

Fig. 10 shows examples of the change of the lever ratio with respect to the first arm.

Fig. 11 shows an example of the actuator unit including a friction member.

Fig. 12 is a sectional view along XII-XII line shown in Fig. 11.

DETAILED DESCRIPTION OF THE EMBODIMENTS

A clutch device according to an embodiment and a straddle-type vehicle including the clutch device will be described. A motorcycle will be explained as an example of the straddle-type vehicle. Fig. 1 is a side view of a motorcycle Mc.

The motorcycle Mc includes a front wheel 2 and a rear wheel 3. The front wheel 2 is supported at the lower end of a front suspension 4. A steering handle 5 is disposed on the upside of the front suspension 4. The front suspension 4 is rotatable around a steering shaft (not shown). The rear wheel 3 is supported at the rear end of a rear arm 8. The front end of the rear arm 8 is supported by a pivot shaft (not shown) provided in the vehicle body frame, and the rear wheel 3 is movable upward and downward around the pivot shaft. An engine unit 6 is located between the front wheel 2 and the rear wheel 3.

The engine unit 6 includes a piston 6a and a crank shaft 6b connected to the piston 6a. The engine unit 6 includes, in the rear part of the engine unit 6, a transmission (not shown) and a clutch 30 for transmitting the torque of the crank shaft 6b to the transmission. A clutch device 1 includes the clutch 30 and a drive unit 10 for operation of the clutch 30, which will be described later.

The clutch 30 is provided on a main shaft 39. The clutch 30 has a drive member that integrally rotates with the crank shaft 6b and is freely rotatable with respect to the main shaft 39, and a driven member that integrally rotates with the main shaft 39. Further, the clutch 30 has a pressure member for pressing a friction member so that the drive member and the driven member may be engaged through the friction member.

Fig. 2 is a sectional view showing the clutch 30. In an example, the clutch 30 includes a clutch housing 31 (drive member) and a clutch boss 32 (driven member) located inside the clutch housing 31. A speed reduction gear 31 a is provided in the clutch housing 31. The speed reduction gear 31a integrally rotates with a gear of the crank shaft 6b. In an example, the clutch 30 is a multiple-disc clutch. That is, the clutch 30 includes a plurality of friction plates 34 (friction members) which integrally rotate with the clutch housing 31, and a plurality of clutch plates 35 (friction members) which integrally rotate with the clutch boss 32. The clutch 30 may be a single-disc clutch having only one friction plate. Further, the clutch 30 includes a pressure member 33. The pressure member 33 is movable in the axis direction of the shaft 39 and presses the friction plates 34 and the clutch plates 35 toward the clutch boss 32.

The torque capacity (degree of engagement) which the clutch 30 has changes in response to the position of the pressure member 33 (the torque capacity means the maximum torque which the clutch 30 can transmit). The pressure member 33 is movable between an engagement position and a complete release position. At the engagement position, the pressure member 33 is pressed against the plates 34, 35 and the clutch 30 is in an engagement state (i.e., the torque capacity of the clutch 30 is the maximum). At the complete release position, the pressure member 33 is not in contact with the plates 34, 35 and the clutch 30 is in a non-engagement state (i.e., the torque capacity of the clutch 30 is zero). The pressure member 33 passes through a contact start position in the course in which the pressure member 33 moves between the complete release position and the engagement position. In the contact start position, no pressing force from the pressure member 33 acts on the plates 34, 35, but contact between the friction plates 34 or the clutch plates 35 and the pressure member 33 is started.

The motorcycle Mc includes, as components of the clutch device 1 thereof, the clutch 30 and the drive unit 10 for operating the pressure member 33. The drive unit 10 includes an actuator unit Ac containing an actuator 20 and a link mechanism (1Ar, R, 2Ar, 2S) linking the actuator unit Ac and the pressure member 33, as will be described later. The link mechanism transmits power of the actuator unit Ac to the pressure member 33.

In an example, as shown in Fig. 2, the clutch 30 includes a clutch spring 36 that presses the pressure member 33 toward the clutch boss 32. Therefore, under a situation where the actuator unit Ac is not activated, the pressure member 33 is subjected to the force of the clutch spring 36 to thereby be placed in the engagement position. When the pressure member 33 moves toward the complete release position or the contact start position, the actuator unit Ac moves the pressure member 33 against the force of the clutch spring 36.

Fig. 3 is a graph showing relationships between the position of the pressure member 33 and a force from the pressure member 33 acting on the drive unit 10 (hereinafter, the force is referred to as "clutch reaction force"). The clutch reaction force is a force necessary for maintenance of the position of the pressure member 33.

As described above, the pressure member 33 is urged toward the engagement position by the clutch spring 36. When the pressure member 33 is in the engagement position, the force applied to the pressure member 33 from the clutch spring 36 and the reaction force from the plates 34, 35 acting on the pressure member 33 are balanced. Accordingly, as shown by solid line A in Fig. 3, when the pressure member 33 is in the engagement position, the clutch reaction force which acts on the drive unit 10 becomes minimum (zero).

When the pressure member 33 moves to the contact start position from the engagement position, the clutch reaction force acting on the drive unit 10 gradually increases. The reason is as follows. The clutch spring 36 is attached to the clutch 30 with high preload applied thereon. That is, the clutch spring 36 is attached to the clutch 30 in a state where the clutch spring 36 is compressed from the natural length of the clutch spring 36. The movable range of the pressure member 33 is smaller compared to the amount of compression of the clutch spring 36. Thus, the pressing force of the clutch spring 36 is substantially constant between the engagement position and the complete release position. On other hand, when the pressure member 33 moves to the contact start position from the engagement position, the reaction force from the plates 34, 35 acting on the pressure member 33 is gradually reduced. Accordingly, when the pressure member 33 moves to the contact start position from the engagement position, the clutch reaction acting on the drive unit 10 gradually increases. Then, when the pressure member 33 reaches the contact start position, the clutch reaction force becomes the maximum.

When the pressure member 33 is between the engagement position and the contact start position, the clutch 30 is in a semi-engagement state where the clutch 30 has smaller torque capacity than the maximum torque capacity. When the pressure member 33 is between the contact start position and the complete release position (i.e., the clutch 30 is in the non-engagement position), the clutch reaction force acting on the drive unit 10 maintains the maximum.

It is not indispensable that the clutch 30 has the clutch spring 36. When the clutch 30 does not have the clutch spring 36, the pressure member 33 may be separated from the plates 34, 35 and placed in the complete release position in a state where the actuator unit Ac is not activated. When the pressure member 33 moves from the contact start position toward the engagement position, the actuator unit Ac moves the pressure member 33 against the reaction force caused by the plates 34, 35.

Fig. 4 is a graph showing a relationship between the position of the pressure member 33 and the clutch reaction force acting on the drive unit 10 in a case where no clutch spring 36 is provided in the clutch 30. When the pressure member 33 is between the contact start position and the complete release position, no reaction force from the plates 34, 35 acts on the pressure member 33, and thus the clutch reaction force acting on the drive unit 10 is the minimum (zero). In the course in which the pressure member 33 moves from the contact start position toward the engagement position, the reaction force from the plates 34, 35 acting on the pressure member 33 changes in response to the position of the pressure member 33, and thus, the clutch reaction force acting on the drive unit 10 gradually increases. When the pressure member 33 is in the engagement position, the clutch reaction force is the maximum.

As described above, the clutch reaction force acting on the drive unit 10 changes in response to the position of the pressure member 33. In the following explanation, the position of the pressure member 33 when the clutch reaction force is the minimum is referred to as "small reaction force position" (the small reaction force position corresponds to "one position" in claims). The position of the pressure member 33 when the clutch reaction force is the maximum is referred to as "large reaction force position" (the large reaction force position corresponds to "the other position" in claims). In the case where the clutch spring 36 is provided in the clutch 30, the contact start position is the large reaction force position and the engagement position is the small reaction force position. In the case where no clutch spring 36 is provided in the clutch 30, the engagement position is the large reaction force position and the contact start position is the small reaction force position. The clutch reaction force acting on the drive unit 10 gradually increases in response to the position of the pressure member 33 from the small reaction force position toward the large reaction force position. That is, the range defined by the small reaction force position and the large reaction force position may be a range in which the clutch reaction force monotonically changes. In the clutch 30 having the clutch spring 36, the contact start position (large reaction force position) is a position where the monotonic increase of the clutch reaction force ends in the course in which the pressure member 33 moves from the engagement position to the complete release position. In the clutch 30 having no clutch spring 36, the contact start position (small reaction force position) is a position where the monotonic decrease of the clutch reaction force ends in the course in which the pressure member 33 moves from the engagement position to the complete release position.

In the present description, "monotonic increase" and "monotonic decrease" do not mean that the gradient of the line showing the relationship between the pressure member 33 and the clutch reaction force is constant between the small reaction force position and the large reaction force position. "Monotonic increase" means that the clutch reaction force increases or remains constant in response to the change of the position of the pressure member 33 and does not decrease. "Monotonic decrease" means that the clutch reaction force decreases or remains constant in response to the change of the position of the pressure member 33 and does not increase. For example, as shown by dashed line B in Fig. 3, the gradient of the line showing the relationship between the pressure member 33 and the clutch reaction force may significantly change in a middle position between the large reaction force position and the small reaction force position. Further, as shown by dashed-dotted line C, the gradient of the line showing the relationship between the pressure member 33 and the clutch reaction force may temporarily be zero in a middle position between the large reaction force position and the small reaction force position.

Fig. 5 is a schematic diagram showing the drive unit 10 for operating the clutch 30, i.e., the actuator unit Ac and the link mechanism (1Ar, R, 2Ar, 2S).

The drive unit 10 includes a first rotation shaft 1S rotating by the power of the actuator 20 (electric motor). In an example, as shown in Fig. 5, the first rotation shaft 1S may be provided as an output shaft of the actuator unit Ac. The actuator unit Ac may contain a gear that reduces the rotation speed of the actuator 20, i.e., increases the torque of the actuator 20 and transmits the torque to the first rotation shaft 1S. The first rotation shaft 1S may not necessarily be the output shaft of the actuator unit Ac. That is, a mechanism for transmitting the rotation of the output shaft to the first rotation shaft 1S may be provided between the output shaft of the actuator unit Ac and the first rotation shaft 1S.

The link mechanism includes a first arm 1Ar. The first arm 1Ar rotates together with the first rotation shaft 1S around the first rotation shaft 1S. The first arm 1Ar extends from the first rotation shaft 1S in the radius direction thereof. The first arm 1Ar shown in Fig. 5 has a rod shape, however, the shape may be appropriately changed. The first arm 1Ar may be attached to the first rotation shaft 1S or integrally formed with the first rotation shaft 1S.

The link mechanism includes a second rotation shaft 2S. The second rotation shaft 2S rotates together with the movement of the pressure member 33. In an example explained here, as shown in Fig. 2, a gear 2Sa is formed in the lower part of the second rotation shaft 2S. The pressure member 33 has, in the center part of the pressure member 33, a movable member 37 movable together with the pressure member 33 in the axis direction of the shaft 39. The movable member 37 is supported by the pressure member 33 via a bearing 33a and relatively rotatable with respect to the pressure member 33. The gear 2Sa of the second rotation shaft 2S meshes with a rack 37a formed on the movable member 37. Accordingly, when the second rotation shaft 2S rotates, the movable member 37 and the pressure member 33 move in the axis direction. On the other hand, when the movable member 37 and the pressure member 33 moves in the axis direction, the second rotation shaft 2S rotates. A structure for interlocking the second rotation shaft 2S and the pressure member 33 is not limited to the above. For example, the second rotation shaft 2S may include, in place of the gear 2Sa, a cam that converts the rotation of the second rotation shaft 2S into the movement of the movable member 37 in the axis direction.

In the example shown in Fig. 5, the first rotation shaft 1S and the second rotation shaft 2S are arranged so that their axis lines are in parallel. The axis line refers to a straight line passing through a rotation center of a rotation shaft. The positional relationship between the first rotation shaft 1S and the second rotation shaft 2S is not limited to the example shown in Fig. 5. For example, as will be described later, the first rotation shaft 1S and the second rotation shaft 2S may have a skew positional relationship. That is, the first rotation shaft 1S and the second rotation shaft 2S may be arranged so that a plane perpendicular to one rotation shaft is in parallel to the axis line of the other rotation shaft. First rotation shaft 1S and the second rotation shaft 2S may be arranged so that the plane perpendicular to one rotation shaft is be tilted to the axis line of the other rotation shaft.

As shown in Fig. 5, the link mechanism includes a second arm 2Ar. The second arm 2Ar rotates together with the second rotation shaft 2S around the second rotation shaft 2S. The second arm 2Ar extends from the second rotation shaft 2S in the radius direction thereof. Further, the second arm 2Ar is located at the same side as the first arm 1Ar (the upside in Fig. 5) with respect to a plane containing the axis lines of the two rotation shafts 1S, 2S. In the example of Fig.5, both of the first arm 1Ar and the second arm 2Ar are located on the upper side of the plane. The second arm 2Ar shown in Fig. 5 has a rod shape, however, the shape may be appropriately changed. The second arm 2Ar may be attached to the second rotation shaft 2S or integrally formed with the second rotation shaft 2S.

The link mechanism further includes a coupling member R that connects the first arm 1Ar and the second arm 2Ar. The coupling member R is connected to the first arm 1Ar at a position apart from the rotation center of the first arm 1Ar (i.e., the center of the first rotation shaft 1S). Their connection portions are rotatable with respect to each other. In an example, as shown in Fig. 5, the end of the first arm 1Ar and the end of the coupling member R may be connected to each other and the two ends are rotatable with respect to each other. The coupling member R is connected to the second arm 2Ar in a position apart from the rotation center of the second arm 2Ar (i.e., the center of the second rotation shaft 2S), and their connection portions are rotatable with respect to each other. In an example, as shown in Fig. 5, the end of the second arm 2Ar and the end of the coupling member R may be connected to each other and the two ends are rotatable with respect to each other. The first rotation shaft 1 S and the second rotation shaft 2S interlock with each other via the first arm 1Ar, the coupling member R, the second arm 2Ar. That is, the second rotation shaft 2S and the second arm 2Ar rotate in response to the rotation of the first rotation shaft 1S and the first arm 1Ar. On the other hand, the first rotation shaft 1S and the first arm 1Ar rotate in response to the rotation of the second rotation shaft 2S and the second arm 2Ar.

The coupling member R of the example explained here connects the first arm and the second arm so that the position (angle) of the first arm 1Ar and the position (angle) of the second arm 2Ar have a one-on-one correspondence relationship in the course in which the pressure member 33 is moved from the small reaction force position to the large reaction force position. The coupling member R is a rod, for example. The coupling member R may be a wire. When a wire is used as the coupling member R, the first arm 1Ar pulls the coupling member R, and thereby, the movable ranges of the arms 1Ar, 2Ar are defined so that the pressure member 33 moves from the small reaction force position to the large reaction force position. The position of the first arm 1Ar and the position of the second arm 2Ar have the one-on-one correspondence relationship, and thereby, control of the clutch 30 by the drive unit 10 is easier. In the case where a wire is used as the coupling member R, a pulley rotating together with the first rotation shaft 1S may be attached to the first rotation shaft 1S in place of the first arm 1Ar. Further, in this case, a pulley rotating together with the second rotation shaft 2S may be attached to the second rotation shaft 2S in place of the second arm 2Ar. In this case, the pulley is not limited to a circular type, but may be a type having a radius (a distance from the rotation center to the part in which the wire is caught) that changes in response to the angle, for example.

According to the link mechanism (1Ar, R, 2Ar, 2S), the position of the first rotation shaft 1S and the position of the pressure member 33 are linked. For example, when the first rotation shaft 1S rotates clockwise (D1 direction in Fig. 5), the second rotation shaft 2S also rotates clockwise (D2 direction in Fig. 5), and, as a result, the pressure member 33 moves in the axis direction.

The first arm 1Ar rotates between a first arm position p1 and a second arm position p2 around the first rotation shaft 1S. In Fig. 5, the first arm position p1 is a position of the first arm 1Ar shown by a solid line and the second arm position p2 is a position of the first arm 1Ar shown by a dashed-two dotted line. When the pressure member 33 is placed in the small reaction force position, the first arm 1Ar is placed in the first arm position p1. When the pressure member 33 is placed in the large reaction force position, the first arm 1Ar is placed in the second arm position p2. The arm positions p1, p2 are set so that a lever ratio rt is larger when the first arm 1Ar is in the second arm position p2 than when the first arm 1Ar is in the first arm position p1. In the present specification, the lever ratio rt refers to a ratio of torque T2 of the second rotation shaft 2S to torque T1 of the first rotation shaft 1S (rt = T2/T1). When the arm positions p1, p2 are set as described above, the torque required to the actuator 20 for maintaining the pressure member 33 in the large reaction force position can be reduced. As a result, the actuator 20 can be downsized. The lever ratio rt may monotonously increase in the course in which the first arm 1Ar moves to the second arm position p2 from the first arm position p1. Alternatively, the lever ratio rt may temporarily decrease in the course in which the first arm 1Ar moves to the second arm position p2 from the first arm position p1.

Fig. 6 is a diagram for explanation of transmission of a force from the first rotation shaft 1S to the second rotation shaft 2S and the lever ratio rt. In the drawing, the respective signs represent the following planes or angles.

Ph: plane containing axis lines of two rotation shafts 1S, 2S (i.e., plane containing straight line orthogonal to both of rotation shafts 1S, 2S and axis line of first rotation shaft 1S)
P1: plane containing axis line of first rotation shaft 1S and perpendicular to plane Ph
θ1: angle of first arm 1Ar with respect to plane P1
θx: inclination angle of coupling member R with respect to plane Ph
P2: plane containing axis line of second rotation shaft 2S and perpendicular to plane Ph
θ2: angle of second arm 2Ar with respect to plane P2

When the first rotation shaft 1S has torque T1, a force Fr expressed by the following equations acts on the coupling member R in the extension direction of the coupling member R.

$$Fr = F1/\cos(\theta 1 + \theta x)$$

$$F1 = T1/L1$$

In the equations, F1 is a force in a direction orthogonal to the first arm 1Ar, acting on the connection portion between the first arm 1Ar and the coupling member R. L1 is a distance from the rotation center of the first rotation shaft 1S to the connection portion between the first arm 1Ar and the coupling member R. Concurrently, torque T2 expressed by the following equations acts on the second rotation shaft 2S.

$$T2 = F2 \times L2$$

$$F2 = Fr \times \cos(\theta 2 + \theta x)$$

In the equations, F2 is a force in a direction orthogonal to the second arm 2Ar, acting on the connection portion between the second arm 2Ar and the coupling member R. L2 is a distance from the rotation center of the second rotation shaft 2S to the connection portion between the second arm 2Ar and the coupling member R. Accordingly, the lever ratio rt (= T2/T1) is expressed by the following equation 1.

$$rt = L2/L1 \times \cos(\theta 2 + \theta x)/\cos(\theta 1 + \theta x) \ldots \text{ Equation 1}$$

That is, when the angle (θ1 + θx) becomes larger, the larger lever ratio may be obtained. Accordingly, the two arm positions p1, p2 are defined so that the angle (θ1 + θx) is larger in the second arm position p2 than in the first arm position p1. That is, the two arm positions p1, p2 are defined so that the angle (θ1 + θx) is larger when the pressure member 33 is placed in the large reaction force position than when the pressure member 33 is placed in the small reaction force position. Accordingly, the larger lever ratio rt is obtained when the pressure member 33 is placed in the large reaction force position than when the pressure member 33 is placed in the small reaction force position. The angle (θ1 + θx) is a difference of the angle between the first arm 1Ar and the coupling member R (θk in Fig. 6) from 90 degrees.

Note that, in a case where the coupling member R is sufficiently longer than the arms 1Ar, 2Ar, the angle θx of the coupling member R is smaller. Further, also in a case where the difference in length between the two arms 1Ar, 2Ar is smaller, the angle θx of the coupling member R is smaller. That is, in the cases, the lever ratio rt is lightly affected by the angle θx of the coupling member R, and the lever ratio rt is expressed by the following equation.

$$rt = L2/L1 \times \cos(\theta 2)/\cos(\theta 1)$$

In an example, the two arm positions p1, p2 may be defined so that the angle θ1 formed by the plane P1 and the first arm 1Ar is larger in the second arm position p2 than in the first arm position p1. In other words, in a case where an arm angle θα (see Fig. 6) is defined as the angle between the straight line passing through the axis line of the first rotation shaft 1S and orthogonal to the first rotation shaft 1S and the second rotation shaft 2S and the first arm 1Ar, the arm angle θα when the first arm 1Ar is in the second arm position p2 may be smaller than the arm angle θα when the first arm 1Ar is in the first arm position p1. Accordingly, the larger lever ratio rt can be obtained when the pressure member 33 is in the large reaction force position.

Further, in an example, the two arm positions p1, p2 may be defined so that the angle (θ1 + θx) is gradually larger in the course in which the first arm 1Ar moves from the first arm position p1 to the second arm position p2. That is, the angle (θ1 + θx) monotonically may increase in the course in which the first arm 1Ar moves from the first arm position p1 to the second arm position p2. In the example, the two arm positions p1, p2 are defined at the same side with respect to the plane P1, and the above described arm angle θα is gradually smaller in the course in which the first arm 1Ar moves from the first arm position p1 to the second arm position p2. Accordingly, the lever ratio rt can be made larger as the clutch reaction force is larger.

In the example shown in Fig. 5, the two arm positions p1, p2 are defined at the second rotation shaft 2S side with respect to the plane P1. However, the two arm positions p1, p2 may be defined at the opposite side to the second rotation shaft 2S with respect to the plane P1. Further, the two arm positions p1, p2 may be defined on the opposite side to each other across the plane P1.

As expressed in the above equation 1, the lever ratio rt becomes larger as the difference (θ2 + θx) between 90 degrees and the angle formed by the second arm 2Ar and the coupling member R becomes smaller (closer to zero). Therefore, it is preferable that the angle θ2 formed by the plane P2 and the second arm 2Ar is smaller. For example, when the first arm 1Ar moves from the first arm position p1 to the second arm position p2, the second arm 2Ar may pass through the plane P2. When the movable range of the second arm 2Ar is defined as described above, the angle θ2 can be closer to zero.

Further, it is preferable that the distance L2 is larger than the distance L1. As described above, L2 is the distance from the rotation center of the second rotation shaft 2S to the connection portion between the second arm 2Ar and the coupling member R. L1 is the distance from the rotation center of the first rotation shaft 1S to the connection portion between the first arm 1Ar and the coupling member R. As expressed by the above described equation 1, when the two distances are set as above, the larger lever ratio rt can be obtained.

Furthermore, when the distance L2 is made larger than the distance L1, the rate of change of the lever ratio rt with respect to the change of the angle θ1 of the first arm 1Ar can be increased. Fig. 7 shows relationships between the change of the angle θ1 of the first arm 1Ar and the change of the lever ratio rt on the assumption that the inclination angle θx of the coupling member R is sufficiently smaller. In the graph, the horizontal axis indicates the angle θ1 of the first arm 1Ar and the vertical axis indicates the lever ratio. Further, line A1 is a curve showing an example of the change of the lever ratio rt with respect to the angle θ1 when L1 :L2 = 1:1. Line A2 is a curve showing an example of the change of the lever ratio rt with respect to the angle θ1 when L1:L2 = 1:1.5. Line A3 is a curve showing an example of the change of the lever ratio rt with respect to the angle θ1 when L1:L2 = 1:2. As shown in the graph, when the distance L2 is larger, the gradient of the curve is larger in a region in which the angle of the first arm is larger. That is, when the ratio of the distance L2 to the distance L1 is made larger, the rate of change of the lever ratio rt with respect to the change of the angle θ1 of the first arm 1Ar (rate of rise) can be increased.

As expressed by the equation 1, the lever ratio rt depends on the angle (θ1 + θx) formed by the first arm 1Ar and the coupling member R and the angle (θ2 + θx) formed by the second arm 2Ar and the coupling member R. The angle (θ2 + θx) changes in response to the angle (θ1 + θx). That is, the angle (θ2 + θx) is unambiguously determined from the angle (θ1 + θx). Therefore, if the distances L1, L2, the length Lr of the coupling member R, and the relative positions of the two rotation shafts 1S, 2S are determined, the angle (θ2 + θx) can be calculated based on the angle (θ1 + θx). When it is supposed that Pr is a plane in parallel to the coupling member R and containing the axis line of the second rotation shaft 2S, the first element representing the relative position of the two rotation shafts 1S, 2S is a distance P between a plane Pa (see Fig. 6) and a plane Pb (see Fig. 6). The plane Pa is defined as a plane perpendicular to the plane Pr and containing the axis line of the first rotation shaft 1S. The plane Pb is defined as a plane perpendicular to the plane Pr and containing the axis line of the second rotation shaft 2S. The second element is a distance Lx (see Fig. 6) between the plane Pr and the axis line of the first rotation shaft 1S. The relationship between the rate of change of the lever ratio rt and the angle θ1 of the first arm 1Ar (for example, the relationship shown in Fig. 7) can be adjusted by changing the distances L1, L2, the length Lr of the coupling member R, and the relative positions of the two rotation shafts 1S, 2S.

In the example shown in Figs. 5 and 6, the first rotation shaft 1S and the second rotation shaft 2S are arranged in parallel to each other. However, the first rotation shaft 1 S and the second rotation shaft 2S may have a skew positional relationship. Figs. 8A and 8B are schematic diagrams showing the drive unit 10 in which the two rotation shafts have the above described positional relationship. Fig. 8A shows a view when the drive unit 10 is seen in the axis direction of a first rotation shaft 11S. Fig. 8B shows a view when the drive unit 10 is seen in the axis direction of the second rotation shaft 2S (in the direction shown by b in Fig. 8A).

The drive unit 10 shown in Figs. 8A and 8B includes the second rotation shaft 2S and the second arm 2Ar like the example shown in Fig. 5. The first rotation shaft 11S is provided as an output shaft of the actuator unit Ac like the above described first rotation shaft 1S. The first rotation shaft 11S may not necessarily be the output shaft of the actuator unit Ac. The first rotation shaft 11S and the second rotation shaft 2S are arranged so that the plane perpendicular to one rotation shaft is in parallel to the axis line of the other rotation shaft. In Figs. 8A and 8B, a plane Ph perpendicular to the second rotation shaft 2S and containing the axis line of the first rotation shaft 11S is shown. A first arm 11Ar that rotates together with the first rotation shaft 11S around the first rotation shaft 11S is provided to the first rotation shaft 11S. The first arm 11Ar and the second arm 2Ar are connected via the coupling member R. The coupling member R of the present example is connected to the first arm 11Ar so as to rotate with respect to the first arm 11Ar around two orthogonal center lines. Thereby, both of θx shown in Fig. 8A and θy shown in Fig. 8B change in the course in which the first arm 11Ar rotates. θx is an angle formed by the plane Ph and the coupling member R. θy is an angle formed by a plane perpendicular to the first rotation shaft 11S and the coupling member R. Similarly, the coupling member R is connected to the second arm 2Ar so as to rotate with respect to the second arm 2Ar around two orthogonal center lines.

In the example shown in Figs. 8A and 8B, the position of the first rotation shaft 11S and the position of the pressure member 33 are linked with each other. For example, when the first rotation shaft 11S rotates clockwise (in the D1 direction in Fig. 8A) in Fig. 8A, the second rotation shaft 2S rotates counterclockwise (in the D2 direction in Fig. 8B) in Fig. 8B, and, as a result, the pressure member 33 moves in the axis direction of the shaft 39.

In the example shown in Figs. 8A and 8B, the first arm 11Ar rotates between a first arm position p1 and a second arm position p2 around the first rotation shaft 11S. In Figs. 8A and 8B, the first arm position p1 is a position of the first arm 11Ar shown by a solid line and the second arm position p2 is a position of the first arm 11Ar shown by a dashed-two dotted line. When the pressure member 33 is placed in the above described small reaction force position, the first arm 11Ar is placed in the first arm position p1. When the pressure member 33 is placed in the above described large reaction force position, the first arm 11Ar is placed in the second arm position p2. Further, the arm positions p1, p2 are set so that a lever ratio rt is larger when the first arm 11Ar is in the second arm position p2 than when the first arm 11Ar is in the first arm position p1. Because the arm positions p1, p2 are set as described above, the torque required to the actuator 20 for maintaining the pressure member 33 in the large reaction force position can be reduced. As a result, the actuator unit Ac can be downsized. The lever ratio rt may monotonously increase in the course in which the first arm 11Ar moves to the second arm position p2 from the first arm position p1. Alternatively, the lever ratio rt may temporarily decrease in the course in which the first arm 11Ar moves to the second arm position p2 from the first arm position p1.

Figs. 9A and 9B are diagrams for explanation of transmission of a force from the first rotation shaft 11S to the second rotation shaft 2S and the lever ratio rt. In the drawings, the respective signs show the following planes or angles.

Ph: plane orthogonal to second rotation shaft 2S and containing axis line of first rotation shaft 11S (i.e., plane containing straight line orthogonal to both of rotation shafts 11S, 2S and axis line of first rotation shaft 11S)
P1: plane containing axis line of first rotation shaft 11S and perpendicular to plane Ph θ1: angle of first arm 11Ar with respect to plane P1
P2: plane containing axis line of second rotation shaft 2S and perpendicular to plane Ph
θ2: angle of second arm 2Ar with respect to plane P2
θx: angle of coupling member R with respect to plane Ph
θy: angle of coupling member R with respect to plane perpendicular to first rotation shaft 11S

When the first rotation shaft 11S has torque T1, a force Fr acts on the coupling member R in the extension direction of the coupling member R. The plane perpendicular to the first rotation shaft 11S is in parallel to the axis line of the second rotation shaft 2S. Accordingly, the torque transmitted from the first rotation shaft 11S to the second rotation shaft 2S is mainly affected by a component Fh of the force Fr perpendicular to both of the two rotation shafts 11S, 2S. The force component Fh is expressed by the following equations.

$$Fh = F1/\cos(\theta 1)$$

$$F1 = T1/L1$$

In the above equations, F1 is a force in a direction orthogonal to the first arm 1Ar, acting on the connection portion between the first arm 1Ar and the coupling member R. L1 is a distance from the rotation center of the first rotation shaft 11 S to the connection portion between the first arm 1Ar and the coupling member R. Concurrently, torque T2 expressed by the following equations acts on the second rotation shaft 2S.

$$T2 = F2 \times L2$$

$$F2 = Fh \times \cos(\theta 2)$$

In the equations, F2 is a force in a direction orthogonal to the second arm 2Ar, acting on the connection portion between the second arm 2Ar and the coupling member R. L2 is a distance from the rotation center of the second rotation shaft 2S to the connection portion between the second arm 2Ar and the coupling member R. Accordingly, the lever ratio rt (= T2/T1) is expressed by the following equation 2.

$$rt = L2/L1 \times \cos(\theta 2)/\cos(\theta 1) \text{... Equation 2}$$

That is, as the angle θ1 becomes larger, the larger lever ratio is obtained. Accordingly, the two arm positions p1, p2 are defined so that the angle θ1 is larger in the second arm position p2 than in the first arm position p1. In other words, when it is supposed that an arm angle θα (see Fig. 9A) is the angle between the first arm 11Ar and the straight line passing through the axis line of the first rotation shaft 11S and orthogonal to both of the first rotation shaft 11S and the second rotation shaft 2S, the arm angle θα when the first arm 11Ar is in the second arm position p2 is smaller than the arm angle θα when the first arm 11Ar is in the first arm position p1. Thereby, the angle θ1 in a case where the pressure member 33 is placed in the large reaction force position is larger than that in a case where the pressure member 33 is placed in the small reaction force position. As a result, the larger lever ratio rt is obtained when the pressure member 33 is in the large reaction force position than when the pressure member 33 is placed in the small reaction force position.

In an example, the two arm positions p1, p2 may be defined so that the angle θ1 may be gradually larger in the course in which the first arm 11Ar moves from the first arm position p1 to the second arm position p2. In the example, the two arm positions p1, p2 may be defined at the same side of the plane P1. Accordingly, the above described arm angle θα may be gradually smaller in the course in which the first arm 11Ar moves from the first arm position p1 to the second arm position p2. Thereby, the lever ratio rt can be made larger as the clutch reaction force is larger.

Note that, in the example shown in Figs. 8A and 8B, the two arm positions p1, p2 are defined at the second rotation shaft 2S side with respect to the plane P1. However, the two arm positions p1, p2 may be defined at the opposite side to the second rotation shaft 2S with respect to the plane P1. Further, the two arm positions p1, p2 may be defined on the opposite side to each other across the plane P1.

As expressed by the above described equation 2, the lever ratio rt becomes larger as the angle θ2 formed by the second arm 2Ar and the plane P2 is smaller (closer to zero). Therefore, it is preferable that the angle θ2 is smaller. For example, when the first arm 11Ar moves from the first arm position p1 to the second arm position p2, the second arm 2Ar may pass through the plane P2. When the movable range of the second arm 2Ar is defined as described above, the angle θ2 can be closer to zero. Further, it is preferable that the distance L2 is larger than the distance L1 because the lever ratio rt may be made larger.

As expressed by the equation 2, the lever ratio rt depends on the angle θ1 of the first arm 1Ar and the angle θ2 of the second arm 2Ar. The angle θ2 of the second arm 2Ar changes in response to the angle θ1 of the first arm 1Ar. That is, the angle θ2 is unambiguously determined from the angle θ1. Therefore, if the distances L1, L2, the length Lr of the coupling member R, and the relative positions of the two rotation shafts 11S, 2S are determined, the angle θ2 can be calculated based on the angle θ1. The first element representing the relative position of the two rotation shafts 11S, 2S is a distance P between the axis lines of the two rotation shafts 11S, 2S (see Figs. 9A and 9B) (distance P = distance between plane P1 and plane P2). The second element is a distance Lx which is a distance to the second arm 2Ar from the plane Ph containing the axis line of the first rotation shaft 11S and perpendicular to the second rotation shaft 2S (see Figs. 9A and 9B). The third element is a distance Ly which is a distance to the first arm 11Ar from the plane containing the axis line of the second rotation shaft 2S and perpendicular to the first rotation shaft 11S (see Figs. 9A and 9B). The relationship between the rate of change of the lever ratio rt and the angle θ1 of the first arm 11Ar may be appropriately adjusted by changing the distances L1, L2, the length Lr of the coupling member R, and the relative positions of the two rotation shafts 11S, 2S.

In the example shown in Figs. 8A to 9B, the relationship between the angle θ2 and the angle θ1 defining the lever ratio rt depends on the three distances Lx, Ly, P. On other hand, when the two rotation shafts 11S, 2S are arranged in parallel, the relationship between the angle θ2 and the angle θ1 defining the lever ratio rt depends on the two distances Lx, P. That is, the case where the two rotation shafts have a skew positional relationship has a larger degree of freedom of the relative position of the two rotation shafts than the case where the two rotation shafts are in parallel. Accordingly, the layout in which the two rotation shafts have the skew positional relationship has larger freedom in the manner of the change manner of the lever ratio rt with respect to the angle θ1 of the first arm 1Ar, 11Ar than the layout in which the two rotation shafts are arranged in parallel.

Fig. 10 shows examples of changes of the lever ratio rt with respect to changes of the angle θ1 of the first arms 1Ar, 11Ar. In the graph, the horizontal axis indicates the angle θ1 and the vertical axis indicates the lever ratio rt. Dashed lines B1, B2 in the graph show relationships when the two rotation shafts 1S, 2S are arranged in parallel to each other. Lines C1, C2 in the graph show relationships when the two rotation shafts 11S, 2S have the skew positional relationship. In Fig. 10, the length of the first arms 1Ar, 11Ar, the length of the second arm 2Ar, and the length of the coupling member R are fixed. Regarding the dashed lines B1, B2, it is assumed that the inclination angle θx of the coupling member R is small.

As shown by the lines B1, B2 in Fig. 10, when the two rotation shafts 1S, 2S are arranged in parallel, as the angle θ1 increases, the lever ratio rt rises and the rate of change of the lever ratio rt (the angle of the tangent of lines B1, B2) with respect to the change of the angle θ1 gradually becomes larger. On the other hand, when the two rotation shafts 1S, 2S have the skew rotational relationship, the line C1 shows that, as the angle θ1 increases, the lever ratio rt rises and the rate of change of the lever ratio rt gradually becomes larger. In contrast, the line C2 shows that, as the angle θ1 increases, the lever ratio rt rises, but the rate of change of the lever ratio rt with respect to the change of the angle θ1 gradually becomes smaller. Note that, Fig. 10 shows an example in which the lever ratio rt rises as the angle θ1 increases, however, the lever ratio rt can be lower than one when the angle θ1 increases, by adjusting the relative position of the first rotation shafts 1S, 11S and the second rotation shaft 2S.

When no clutch spring 36 is provided in the clutch 30, it is necessary for the actuator unit Ac to continuously press the pressure member 33 for maintaining the pressure member 33 in the engagement position. As described above, the actuator unit Ac includes the actuator 20 (electric motor) and the gear that transmits the rotation of the actuator 20 to the output shaft thereof (the first rotation shafts 1S, 11S in the above described example). When no clutch spring 36 is provided in the clutch 30, the actuator unit Ac may include a friction member that reduces the rotation of the rotation member (specifically, the rotation shaft and the gear of the actuator 20) therein. According to the actuator unit Ac described above, when the pressure member 33 is placed in the engagement position, the torque necessary for maintaining the position can be reduced. As a result, durability of the actuator 20 can be improved and power consumption of the actuator 20 can be reduced.

Figs. 11 and 12 show an example of the actuator unit Ac. Fig. 11 shows the actuator unit Ac seen in the axis direction. Fig. 12 is a sectional view along XII-XII line shown in Fig. 11.

The actuator unit Ac of the example includes the actuator 20, a first gear 21, a second gear 22, a third gear 23, and the above described first rotation shaft 1 S as the output shaft. The first gear 21 has a large diameter gear part 21 a engaged with a rotation shaft 20a of the actuator 20, and a small diameter gear part 21b having the smaller diameter than the large diameter gear part 21a. The second gear 22 has a large diameter gear part 22a engaged with the small diameter gear part 21b, and a small diameter gear part 22b having the smaller diameter than the large diameter gear part 22a. The third gear 23 is engaged with the small diameter gear part 22b. Further, the third gear 23 may be provided on the first rotation shaft 1S (11S) and integrally rotates with the first rotation shaft 1S (11S). When the gears 21, 22, 23 are provided to the actuator unit Ac, the rotation of the actuator 20 is reduced and transmitted to the first rotation shaft 1S (11S). In other words, the torque of the actuator 20 is increase and transmitted to the first rotation shaft 1S (11S). In the actuator unit Ac, a sensor 29 for sensing an amount of operation of the actuator unit Ac is attached to the second gear 22.

The actuator unit Ac includes a friction clip 24. In the example explained here, the rotation of the friction clip 24 is restricted. The friction clip 24 may be in contact with the first gear 21 for generating friction between the rotating first gear 21 and the friction clip 24.

The first gear 21 may include a contact part 21c in addition to the gear parts 21a, 21b. In an example, the contact part 21 c may have a disc shape that rotates together with the gear parts 21a, 21b. The friction clip 24 may clip the outer circumference of the contact part 21c for generating friction between the rotating first gear 21 and the friction clip 24.

Specifically, the friction clip 24 may have two arm parts 24A, 24B with ends connected to each other. Each of the arm parts 24A, 24B may have a contact part 24a in contact with the outer circumference of the contact part 21c of the gear 21. The two contact parts 24a may have an annular shape as a whole. According to the shape of the friction clip 24, the contact area between the friction clip 24 and the first gear 21 can be easily secured. The arm parts 24A, 24B respectively may have two fixing parts 24b connected to each other. The two fixing parts 24b may be fixed to the case 25 of the actuator unit Ac, for example, for restriction of the rotation of the friction clip 24. Using the friction clip 24, the torque of the actuator 20 necessary for maintaining the engagement position of the pressure member 33 can be reduced.

The first gear 21 is a gear placed at the uppermost position in the torque transmission path of the gears 21, 22, 23 of the actuator unit Ac. Accordingly, the torque of the first gear 21 is smaller than the toque of the other gears. Because the friction clip 24 in the example explained here is in contact with the first gear 21, the rotation of the first gear 21 can be reduced by a relatively smaller friction force.

Further, the contact part 21c of the first gear 21 may have a larger diameter than that of the large diameter gear part 21a. The friction clip 24 is in contact with the outer circumference of the contact part 21c. Accordingly, the friction force between the first gear 21 and the friction clip 24 acts more effectively so as to reduce the rotation of the first gear 21.

Note that, the friction clip 24 may be in contact with the other gears 22, 23 for generating friction between the gears and itself. Further, the rotation member with which the friction clip 24 is in contact is not limited to the gear that transmits the rotation of the actuator 20 to the output shaft (the first rotation shafts 1S, 11 S in the above described examples). For example, the actuator unit Ac may include a rotation member rotating together with the rotation shaft 20a of the actuator 20, but being not in the power transmission path from the rotation shaft 20a to the output shaft. Further, the friction clip 24 may be in contact with the rotation member. Thereby, setting of the gear ratio between the rotation member and the rotation shaft 20a can be easily made and thus the torque generated by the friction clip 24 can be easily adjusted. The friction member of the actuator unit Ac is not limited to the friction clip 24. For example, the friction member may be in contact with the contact part 21c of the first gear 21 in the axis direction of the rotation shaft 20a.

The friction member may not necessarily be provided in the actuator unit Ac. For example, a friction member in contact with the rotating first rotation shaft 1 S and second rotation shaft 2S for generating friction between the shafts and itself may be provided.

As described above, when the pressure member 33 is placed in the small reaction force position, the first arm 1Ar, 11Ar is placed in the first arm position p1. When the pressure member 33 is placed in the large reaction force position, the first arm 1Ar, 11Ar is placed in the second arm position p2. The arm positions p1, p2 are set so that the lever ratio rt when the first arm 1Ar, 11Ar is in the second arm position p2 may be larger than the lever ratio rt when the first arm 1Ar, 11Ar is in the first arm position p1. According to the two arm positions p1, p2 set as described above, the torque required to the actuator 20 for maintaining the pressure member 33 in the large reaction force position can be reduced. As a result, the actuator 20 can be downsized.

Note that the present teaching is not limited to the above described embodiments and the examples, but various changes may be made.

For example, in the above example, the two arm positions p1, p2 are set so that the lever ratio rt monotonically rise from the first arm position p1 to the second arm position p2. However, the lever ratio rt may rise and then fall in the course in which the first arm 1Ar (11Ar) moves from the first arm position p1 toward the second arm position p2. Then, the lever ratio when the first arm 1Ar, 11Ar is placed in the second arm position p2 may be larger than the lever ratio rt when the first arm 1Ar, 11Ar is placed in the first arm position p1.

## Claims

**1.** A clutch device comprising:

a clutch (30) including a friction member (34) and a pressure member (33) for pressing the friction member (34), the pressure member (33) being movable to a contact start position where contact between the pressure member (33) and the friction member (34) is started and to an engagement position where the pressure member (33) is pressed against the friction member (34) and the clutch (30) is engaged; and
a drive unit (10) adapted to move the pressure member (33),
the drive unit including
an actuator (20),
a first rotation shaft (1S, 11S) adapted to be rotated by power of the actuator (20),
a first member (1Ar, 11Ar) adapted to rotate together with the first rotation shaft (1S, 11S) around the first rotation shaft (1S, 11S),
a second rotation shaft (2S) adapted to rotate together with the movement of the pressure member (33),
a second member (2Ar) adapted to rotate together with the second rotation shaft (2S) around the second rotation shaft (2S), and
a coupling member (R) adapted to connect, and to interlock, the first member (1Ar, 11Ar) and the second member (2Ar),
**characterized in that** the clutch (30) is adapted so that a clutch reaction force defined as a force acting on the drive unit from the pressure member (33) increases in a course in which the pressure member (33) moves from one position to the other position of the contact start position and the engagement position,
the first member (1Ar, 11Ar) is placed in a first position (p1) when the pressure member (33) is placed in the one position of the contact start position and the engagement position, and placed in a second position (p2) when the pressure member (33) is placed in the other position of the contact start position and the engagement position, and
the first position (p1) and the second position (p2) are so that a lever ratio (rt) is larger when the first member (1Ar, 11Ar) is in the second position (p2) than when the first member (1Ar, 11Ar) is in the first position (p1), wherein the lever ratio is defined as a ratio (T2/T1) of torque (T2) of the second rotation shaft (2S) to torque (T1) of the first rotation shaft (1S, 11S).

2. A clutch device according to claim 1, **characterized in that** the first position (p1) and the second position (p2) are set so that the lever ratio (tr) increases from the first position (p1) toward the second position (p2).

3. A clutch device according to claim 1 or 2, **characterized in that,** when a plane (Ph) is defined as a plane containing an axis line of the first rotation shaft (1S, 11S) and a line orthogonal to both of the first rotation shaft (1S, 11S) and the second rotation shaft (2S), and an angle ($\theta\alpha$) between the plane (Ph) and the first member (1Ar, 11Ar) is defined as a first member angle, the first member angle ($\theta\alpha$) is smaller when the first member (1Ar,11Ar) is in the second position (p2) than when the first member (1Ar, 11Ar) is in the first position (p1).

4. A clutch device according to claim 3, **characterized in that** the first position (p1) and the second position (p2) are set so that the first member angle ($\theta\alpha$) decreases in a course in which the first member (1Ar, 11Ar) rotates from the first position (p1) toward the second position (p2).

5. A clutch device according to any one of claims 1 to 4, **characterized in that** the first rotation shaft (1S) and the second rotation shaft (2S) are arranged so that axis lines thereof are in parallel to each other, and
the first position (p1) and the second position (p2) are set so that a difference ($\theta 1+\theta x$) between an angle ($\theta k+\theta x$) of the coupling member (R) and a right angle is larger in the second position (p2) than in the first position (p1), where the angle ($\theta k+\theta x$) of the coupling member (R) is defined as an angle of the coupling member (R) with respect to a line connecting the first rotation shaft (1S) to a connection portion between the first member (1Ar) and the coupling member (R).

6. A clutch device according to any one of claims 1 to 4, **characterized in that** the first rotation shaft (11S) and the second rotation shaft (2S) are arranged so that a plane perpendicular to one rotation shaft of the first rotation shaft (11S) and the second rotation shaft (2S) is in parallel to an axis line of the other rotation shaft.

7. A clutch device according to any one of claims 1 to 6, **characterized in that** a distance from an axis line of the second rotation shaft (2S) to a connection portion between the coupling member (R) and the second member (2Ar) is larger than a distance from an axis line of the first rotation shaft (1S, 11S) to a connection portion between the coupling member (R) and the first member (1Ar, 11Ar).

8. A clutch device according to any one of claims 1 to 7, **characterized in that** the clutch (30) is configured such that the pressure member (33) moves in a direction away from the friction member (34) when the power of the actuator (20) acting on the pressure member (33) is reduced, and
the clutch reaction force increases in a course in where the pressure member (33) moves from the contact start position to the engagement position.

9. A clutch device according to any one of claims 1 to 7, **characterized in that** the clutch (30) is configured such that the pressure member (33) moves toward the engagement position when the power of the actuator (20) acting on the pressure member (33) is reduced, and
the clutch reaction force increases in a course in which the pressure member (33) moves from the engagement position to the contact start position.

10. A clutch device according to claim 9, **characterized in that** the drive unit further includes a friction member (24) provided to at least one member of a rotation shaft (20a) of the actuator (20), a rotation member (21,22,23) that rotates together with the rotation shaft (20a) of the actuator (20), the first rotation shaft (1S,11S), and the second rotation shaft (2S) for reducing rotation of the at least one member.

**11.** A clutch device according to claim 10, **characterized in that** the friction member (24) is provided on at least one of the rotation shaft (20a) of the actuator (20) and the rotation member (21,22,23) that rotates with the rotation shaft (20a) of the actuator (20).

**12.** A straddle-type vehicle comprising the clutch device according to any one of claims 1 to 11.

**13.** A method for controlling a clutch device, preferably according to the claims 1 to 11, having a clutch (30) including a friction member (34) and a pressure member (33) for pressing the friction member (34), the pressure member (33) being movable to a contact start position where contact between the pressure member (33) and the friction member (34) is started and to an engagement position where the pressure member (33) is pressed against the friction member (34) and the clutch (30) is engaged; and a drive unit (10) that moves the pressure member (33), the drive unit including
an actuator (20),
a first rotation shaft (1 S, 11 S) that rotates by power of the actuator (20),
a first member (1Ar, 11Ar) that rotates together with the first rotation shaft (1S, 11S) around the first rotation shaft (1S, 11S),
a second rotation shaft (2S) that rotates together with the movement of the pressure member (33),
a second member (2Ar) that rotates together with the second rotation shaft (2S) around the second rotation shaft (2S), and
a coupling member (R) that connects, and interlocks, the first member (1Ar, 11Ar) and the second member (2Ar),
**characterized in that** a clutch reaction force is defined as a force acting on the drive unit from the pressure member (33) increases in a course in which the pressure member (33) moves from one position to the other position of the contact start position and the engagement position,
the first member (1Ar, 11Ar) is placed in a first position (p1) when the pressure member (33) is placed in the one position of the contact start position and the engagement position, and placed in a second position (p2) when the pressure member (33) is placed in the other position of the contact start position and the engagement position, and the first position (p1) and the second position (p2) are so that a lever ratio (rt) is larger when the first member (1Ar, 11Ar) is in the second position (p2) than when the first member (1Ar, 11Ar) is in the first position (p1), wherein the lever ratio is defined as a ratio (T2/T1) of torque (T2) of the second rotation shaft (2S) to torque (T1) of the first rotation shaft (1S, 11S).

## Patentansprüche

**1.** Eine Kupplungsvorrichtung, die umfasst:

eine Kupplung (30), die ein Reibelement (34) und ein Druckelement (33) zum Drücken des Reibelements (34) beinhaltet, das Druckelement (33) ist bewegbar in eine Kontakt-Start-Position in der Kontakt zwischen dem Druckelement (33) und dem Reibelement (34) gestartet ist und in eine Eingriffs-Position, in der das Druckelement (33) gegen das Reibelement (34) gedrückt ist und die Kupplung (30) im Eingriff ist;
und
einer Antriebseinheit (10), angepasst um das Druckelement (33) zu bewegen,
die Antriebseinheit beinhaltet
einen Aktuator (20),
eine erste Drehwelle (1S, 11S), angepasst um durch die Leistung des Aktuators (20) gedreht zu werden,
ein erstes Element (1Ar, 11Ar), angepasst um zusammen mit der ersten Drehwelle (1S, 11S) um die erste Drehwelle (1S, 11S) gedreht zu werden,
eine zweite Drehwelle (2S), angepasst um zusammen mit der Bewegung des Druckelements (33) zu drehen,
ein zweites Element (2Ar), angepasst um zusammen mit der zweiten Drehwelle (2S) um die zweite Drehwelle (2S) zu drehen, und
ein Kupplungselement (R), angepasst um das erste Element (1Ar, 11Ar) und das zweite Element (2Ar) zu verbinden und zu verriegeln,
**dadurch gekennzeichnet, dass** die Kupplung (30) angepasst ist, sodass eine Kupplungs-Reaktionskraft, definiert als eine Kraft, die auf die Antriebseinheit von dem Druckelement (33) wirkt, ansteigt, in einem Verlauf in welchem sich das Druckelement (33) von einer Position zu der anderen Position von der Kontakt-Start-Position und der Eingriffs-Position bewegt,
das erste Element (1Ar, 11Ar) ist in einer ersten Position (p1) plaziert, wenn das Druckelement (33) in der einen Position von der Kontakt-Start-Position und der Eingriffs-Position plaziert ist, und ist in einer zweiten Position (p2) plaziert, wenn das Druckelement (33) in der anderen Position von der Kontakt-Start-Position und der Eingriffs-Position plaziert ist, und
die erste Position (p1) und die zweite Position (p2) sind so, dass ein Hebelverhältnis (rt) größer ist, wenn das erste Element (1Ar, 11Ar) in der zweiten Position (p2) ist, als wenn das erste Element (1Ar, 11Ar) in der ersten Position (p1) ist, wobei das Hebelverhältnis definiert ist als ein Verhältnis (T2/T1) des Moments (T2) der zweiten Drehwelle (2S) zu dem Moment (T1) der ersten Drehwelle (1S, 11S).

2. Eine Kupplungsvorrichtung gemäß Anspruch 1, **dadurch gekennzeichnet, dass** die erste Position (p1) und die zweite Position (p2) so gesetzt sind, dass das Hebeverhältnis (tr) von der ersteren Position (p1) zu der zweiten Position (p2) ansteigt.

3. Eine Kupplungsvorrichtung gemäß Anspruch 1 oder 2, **dadurch gekennzeichnet, dass,** wenn eine ebene (Ph) definiert ist als eine Ebene, welche eine Axiallinie der ersten Drehwelle (1S, 11S) und eine Linie senkrecht zu beiden, der ersten Drehwelle (1S, 11S) und der zweiten Drehwelle (2S), definiert ist, und ein Winkel ($\theta\alpha$) zwischen der Ebene (Ph) und dem ersten Element (1Ar, 11Ar) als ein erster Elementwinkel definiert ist, ist der erste Elementwinkel ($\theta\alpha$) kleiner, wenn das erste Element (1Ar, 11Ar) in der zweiten Position (p2) ist, als wenn das erste Element (1Ar, 11Ar) in der ersten Position (p1) ist.

4. Eine Kupplungsvorrichtung gemäß Anspruch 3, **dadurch gekennzeichnet, dass** die erste Position (p1) und die zweite Position (p2) so gesetzt sind, dass der erste Elementwinkel ($\theta\alpha$) ansteigt in einem Verlauf in welchem das erste Element (1Ar, 11Ar) von der ersten Position (p1) zu der zweiten Position (p2) dreht.

5. Eine Kupplungsvorrichtung gemäß irgendeinem der Ansprüche 1 bis 4, **dadurch gekennzeichnet, dass** die erste Drehwelle (1S) und die zweite Drehwelle (2S) angeordnet sind, sodass Axiallinien derselben parallel zueinander sind, und
die erste Position (p1) und die zweite Position (p2) sind gesetzt, sodass eine Differenz ($\theta 1+\theta x$) zwischen einem Winkel ($\theta k+\theta x$) des Kopplungselements (R) und einem rechten Winkel in der zweiten Position (p2) größer ist als in der ersten Position (p1), wobei der Winkel ($\theta k+\theta x$) des Kopplungselements (R) definiert ist als ein Winkel des Kopplungselements (R) mit Bezug auf eine Linie, welche die erste Drehwelle (1S) mit einem Verbindungsabschnitt zwischen dem ersten Element (1Ar) und dem Kopplungselement (R) verbindet.

6. Eine Kupplungsvorrichtung gemäß irgendeinem der Ansprüche 1 bis 4, **dadurch gekennzeichnet, dass** die erste Drehwelle (11S) und die zweite Drehwelle (2S) angeordnet sind, sodass eine Ebene, senkrecht zu einer Drehwelle, von der ersten Drehwelle (11S) und der zweiten Drehwelle (2), parallel zu einer Axiallinie der anderen Drehwelle ist.

7. Eine Kupplungsvorrichtung gemäß irgendeinem der Ansprüche 1 bis 6, **dadurch gekennzeichnet, dass** ein Abstand von einer Axiallinie der zweiten Drehwelle (2S) zu einem Verbindungsabschnitt zwischen dem Kupplungselement (R) und dem zweiten Element (2Ar) größer ist als ein Abstand von einer Axiallinie der ersten Drehwelle (1S, 11S) zu einem Verbindungsabschnitt zwischen dem Kopplungselement (R) und dem ersten Element (1Ar, 11Ar).

8. Eine Kupplungsvorrichtung gemäß irgendeinem der Ansprüche 1 bis 7, **dadurch gekennzeichnet, dass** die Kupplung (30) konfiguriert ist, so dass das Druckelement (33) in eine Richtung weg von dem Reibelement (34) bewegt, wenn die Leistung des Aktuators (20), der auf das Druckelement (33) wirkt, reduziert ist, und
die Kupplungs-Reaktionskraft ansteigt in einem Verlauf, in dem das Druckelement (33) sich von der Kontakt-Start-Position zu der Eingriffs-Position bewegt.

9. Eine Kupplungsvorrichtung gemäß irgendeinem der Ansprüche 1 bis 7, **dadurch gekennzeichnet, dass** die Kupplung (30) konfiguriert ist, sodass das Druckelement (33) sich zu der Eingriffs-Position bewegt, wenn die Leistung des Aktuators (20), der auf das Druckelement (33) wirkt, reduziert ist, und
die Kupplungs-Reaktionskraft ansteigt in einem Verlauf, in dem das Druckelement (33) sich von der Eingriffs-Position zu der Kontakt-Start-Position bewegt.

10. Eine Kupplungsvorrichtung gemäß Anspruch 9, **dadurch gekennzeichnet, dass** die Antriebseinheit weiterhin ein Reibelement (24), das an zumindest einem Element einer Drehwelle (20a) des Aktuators (20) vorgesehen ist, ein Drehelement (21, 22, 23), das zusammen mit der Drehwelle (20a) des Aktuators (20) dreht, die erste Drehwelle (1S, 11S), und die zweite Drehwelle (2S) zur Reduktionsdrehung von zumindest einem Element, beinhaltet.

**11.** Eine Kupplungsvorrichtung gemäß Anspruch 10, **dadurch gekennzeichnet, dass** das Reibelement (24) an zumindest einem von der Drehwelle (20a) des Aktuators (20) und dem Drehelement (21, 22, 23), das mit der Drehwelle (20a) des Aktuators (20) dreht, vorgesehen ist.

**12.** Ein Spreizsitz-Typ-Fahrzeug, welches die Kupplungsvorrichtung gemäß irgendeinem der Ansprüche 1 bis 11 umfasst.

**13.** Eine Verfahren zur Steuerung einer Kupplungsvorrichtung, insbesondere gemäß der Ansprüche 1 bis 11, die aufweist eine Kupplung (30), die ein Reibelement (34) und ein Druckelement (33) zum Drücken des Reibelements (34) beinhaltet, das Druckelement (33) ist bewegbar in eine Kontakt-Start-Position in der Kontakt zwischen dem Druckelement (33) und dem Reibelement (34) gestartet ist und in eine Eingriffs-Position, in der das Druckelement (33) gegen das Reibelement (34) gedrückt ist und die Kupplung (30) im Eingriff ist; und
einer Antriebseinheit (10), angepasst um das Druckelement (33) zu bewegen,
die Antriebseinheit beinhaltet
einen Aktuator (20),
eine erste Drehwelle (1S, 11S), angepasst um durch die Leistung des Aktuators (20) gedreht zu werden,
ein erstes Element (1Ar, 11Ar), angepasst um zusammen mit der ersten Drehwelle (1S, 11S) um die erste Drehwelle (1S, 11S) gedreht zu werden,
eine zweite Drehwelle (2S), angepasst um zusammen mit der Bewegung des Druckelements (33) zu drehen,
ein zweites Element (2Ar), angepasst um zusammen mit der zweiten Drehwelle (2S) um die zweite Drehwelle (2S) zu drehen, und
ein Kupplungselement (R), angepasst um das erste Element (1Ar, 11Ar) und das zweite Element (2Ar) zu verbinden und zu verriegeln,
**dadurch gekennzeichnet, dass** eine Kupplungs-Reaktionskraft definiert ist als eine Kraft, die auf die Antriebseinheit von dem Druckelement (33) wirkt, die ansteigt in einem Verlauf in welchem sich das Druckelement (33) von einer Position zu der anderen Position von der Kontakt-Start-Position und der Eingriffs-Position bewegt, das erste Element (1Ar, 11Ar) ist in einer ersten Position (p1) plaziert, wenn das Druckelement (33) in der einen Position von der Kontakt-Start-Position und der Eingriffs-Position plaziert ist, und ist in einer zweiten Position (p2) plaziert, wenn das Druckelement (33) in der anderen Position von der Kontakt-Start-Position und der Eingriffs-Position plaziert ist, und die erste Position (p1) und die zweite Position (p2) sind so, dass ein Hebelverhältnis (rt) größer ist, wenn das erste Element (1Ar, 11Ar) in der zweiten Position (p2) ist, als wenn das erste Element (1Ar, 11Ar) in der ersten Position (p1) ist, wobei das Hebelverhältnis definiert ist als ein Verhältnis (T2/T1) des Moments (T2) der zweiten Drehwelle (2S) zu dem Moment (T1) der ersten Drehwelle (1S, 11S).

## Revendications

**1.** Dispositif d’embrayage comprenant :

un embrayage (30) incluant un organe de friction (34) et un élément presseur (33) destiné à presser l’organe de friction (34), l’élément presseur (33) étant mobile vers une position de début de contact où débute le contact entre l’élément presseur (33) et l’organe de friction (34), et vers une position d’engagement où l’élément presseur (33) est pressé contre l’organe de friction (34), et où l’embrayage (30) est engagé, et
une unité d’entraînement (10) conçue pour déplacer l’élément presseur (33),
l’unité d’entraînement incluant :

un actionneur (20)
un premier arbre de rotation (1S, 11S) conçu pour être mis en rotation par la puissance de l’actionneur (20),
un premier organe (1Ar, 11Ar) conçu pour tourner avec le premier arbre de rotation (1S, 11S) autour du premier arbre de rotation (1S, 11S),
un second arbre de rotation (2S) conçu pour tourner avec le mouvement de l’élément presseur (33),
un second organe (2Ar) conçu pour tourner avec le second arbre de rotation (2S) autour du second arbre de rotation (2S), et
un élément de couplage (R) conçu pour raccorder, et pour verrouiller mutuellement, le premier organe (1Ar, 11Ar) et le second organe (2Ar),

**caractérisé en ce que** l'embrayage (30) est conçu de sorte à ce qu'une force de réaction d'embrayage, définie comme étant une force agissant sur l'unité d'entraînement à partir de l'élément presseur (33), augmente, dans un parcours dans lequel l'élément presseur (33) se déplace d'une première position à l'autre : la position de début de contact et la position d'engagement,
le premier organe (1Ar, 11Ar) est placé dans une première position (p1) lorsque l'élément presseur (33) est placé dans la première position parmi la position de début de contact et la position d'engagement, et il est placé dans une seconde position (p2) lorsque l'élément presseur (33) est placé dans l'autre position parmi la position de début de contact et la position d'engagement, et
la première position (p1) et la seconde position (p2) sont telles qu'un rapport de levier (rt) est plus grand lorsque le premier organe (1Ar, 11Ar) se trouve dans la seconde position (p2) que lorsque le premier organe (1Ar, 11Ar) se trouve dans la première position (p1), le rapport de levier étant défini comme étant le rapport (T2 / T1) du couple (T2) du second arbre de rotation (2S) sur le couple (T1) du premier arbre de rotation (1S, 11S).

2. Dispositif d'embrayage selon la revendication 1, **caractérisé en ce que** la première position (p1) et la seconde position (p2) sont réglées de sorte à ce que le rapport de levier (tr) augmente de la première position (p1) jusqu'à la seconde position (p2).

3. Dispositif d'embrayage selon la revendication 1 ou la revendication 2, **caractérisé en ce que**, lorsqu'un plan (Ph) est défini comme étant un plan contenant l'axe du premier arbre de rotation (1S, 11S) et une ligne orthogonale à la fois au premier arbre de rotation (1S, 11S) et au second arbre de rotation (2S), et qu'un angle ($\theta\alpha$) entre le plan (Ph) et le premier organe (1Ar, 11Ar) est défini comme étant un premier angle d'organe, le premier angle d'organe ($\theta\alpha$) est plus petit lorsque le premier organe (1Ar, 11Ar) se trouve dans la seconde position (p2) que lorsque le premier organe (1Ar, 11Ar) se trouve dans la première position (p1).

4. Dispositif d'embrayage selon la revendication 3, **caractérisé en ce que** la première position (p1) et la seconde position (p2) sont réglées de sorte à ce que le premier angle d'organe ($\theta\alpha$) diminue dans un parcours dans lequel le premier organe (1Ar, 11Ar) tourne de la première position (p1) à la seconde position (p2).

5. Dispositif d'embrayage selon l'une quelconque des revendications 1 à 4, **caractérisé en ce que** le premier arbre de rotation (1S) et le second arbre de rotation (2S) sont agencés de sorte à ce que leurs axes soient parallèles, et la première position (p1) et la seconde position (p2) sont réglées de sorte à ce que la différence ($\theta 1 + \theta x$) entre un angle ($\theta k + \theta x$) de l'organe de couplage (R) et l'angle droit soit plus grande dans la seconde position (p2) que dans la première position (p1), l'angle ($\theta k + \theta x$) de l'organe de couplage (R) étant défini comme étant un angle de l'organe de couplage (R) par rapport à une droite reliant le premier de rotation (1S) à une partie de raccordement située entre le premier organe (1Ar) et l'organe de couplage (R).

6. Dispositif d'embrayage selon l'une quelconque des revendications 1 à 4, **caractérisé en ce que** le premier arbre de rotation (11S) et le second arbre de rotation (2S) sont agencés de sorte à ce qu'un plan, perpendiculaire à un arbre de rotation parmi le premier arbre de rotation (11S) et le second arbre de rotation (2S), soit parallèle à l'axe de l'autre arbre de rotation.

7. Dispositif d'embrayage selon l'une quelconque des revendications 1 à 6, **caractérisé en ce que** la distance depuis l'axe du second arbre de rotation (2S) jusqu'à une partie de raccordement située entre l'organe de couplage (R) et le second organe (2Ar) est plus grande que la distance de l'axe du premier arbre de rotation (1S, 11S) à une partie de raccordement située entre l'organe de couplage (R) et le premier organe (1Ar, 11Ar).

8. Dispositif d'embrayage selon l'une quelconque des revendications 1 à 7, **caractérisé en ce que** l'embrayage (30) est configuré de sorte à ce que l'élément presseur (33) se déplace dans une direction l'écartant de l'organe de friction (34) lorsque la puissance de l'actionneur (20) agissant sur l'élément presseur (33) se réduit, et
la force de réaction de l'embrayage augmente dans un parcours dans lequel l'élément presseur (33) se déplace depuis la position de début du contact jusqu'à la position d'engagement.

9. Dispositif d'embrayage selon l'une quelconque des revendications 1 à 7, **caractérisé en ce que** l'embrayage (30) est configuré de sorte à ce que l'élément presseur (33) se déplace vers la position d'engagement lorsque la puissance de l'actionneur (20) agissant sur l'élément presseur (33) se réduit, et
la force de réaction de l'embrayage augmente dans un parcours dans lequel l'élément presseur (33) se déplace depuis la position d'engagement jusqu'à la position de début de contact.

**10.** Dispositif d'embrayage selon la revendication 9, **caractérisé en ce que** l'unité d'entraînement inclut en outre un organe de friction (24) procuré à au moins un organe parmi l'arbre de rotation (20a) de l'actionneur (20), l'élément de rotation (21, 22, 23) qui tourne avec l'arbre de rotation (20a) de l'actionneur (20), le premier arbre de rotation (1S, 11S) et le second arbre de rotation (2S) pour réduire la rotation du ou des organes.

**11.** Dispositif d'embrayage selon la revendication 10, **caractérisé en ce que** l'organe de friction (24) est prévu sur au moins l'un de l'arbre de rotation (20a) de l'actionneur (20) et de l'organe de rotation (21, 22, 23) qui tourne avec l'arbre de rotation (20a) de l'actionneur (20).

**12.** Véhicule de type à enfourcher comprenant le dispositif d'embrayage conforme à l'une quelconque des revendications 1 à 11.

**13.** Procédé de commande d'un dispositif d'embrayage, de préférence conforme aux revendications 1 à 11, comportant un embrayage (30) incluant un organe de friction (34) et un élément presseur (33) destiné à presser l'organe de friction (34), l'élément presseur (33) étant mobile vers une position de début de contact où le contact entre l'élément presseur (33) et l'organe de friction (34) débute, et vers une position d'engagement où l'élément presseur (33) est pressé contre l'organe de friction (34), et où l'embrayage (30) est engagé, et une unité d'entraînement (10) qui déplace l'élément presseur (33),
l'unité d'entraînement incluant :

un actionneur (20)
un premier arbre de rotation (1S, 11S) qui tourne grâce à la puissance de l'actionneur (20),
un premier organe (1Ar, 11Ar) qui tourne avec le premier arbre de rotation (1S, 11S) autour du premier arbre de rotation (1S, 11S),
un second arbre de rotation (2S) qui tourne avec le mouvement de l'élément presseur (33),
un second organe (2Ar) qui tourne avec le second arbre de rotation (2S) autour du second arbre de rotation (2S), et
un élément de couplage (R) qui raccorde et qui verrouille mutuellement le premier organe (1Ar, 11Ar) et le second organe (2Ar),
**caractérisé en ce qu'**une force de réaction d'embrayage, définie comme étant une force agissant sur l'unité d'entraînement à partir de l'élément presseur (33), augmente dans un parcours dans lequel l'élément presseur (33) se déplace d'une première position à l'autre : la position de début de contact et la position d'engagement, le premier organe (1Ar, 11Ar) est placé dans une première position (p1) lorsque l'élément presseur (33) est placé dans la première position parmi la position de début de contact et la position d'engagement, et il est placé dans une seconde position (p2) lorsque l'élément presseur (33) est placé dans l'autre position parmi la position de début de contact et la position d'engagement, et
la première position (p1) et la seconde position (p2) sont telles qu'un rapport de levier (rt) est plus grand lorsque le premier organe (1Ar, 11Ar) se trouve dans la seconde position (p2) que lorsque le premier organe (1Ar, 11Ar) se trouve dans la première position (p1), le rapport de levier étant défini comme étant le rapport (T2 / T1) du couple (T2) du second arbre de rotation (2S) sur le couple (T1) du premier arbre de rotation (1S, 11S).

FIG.1

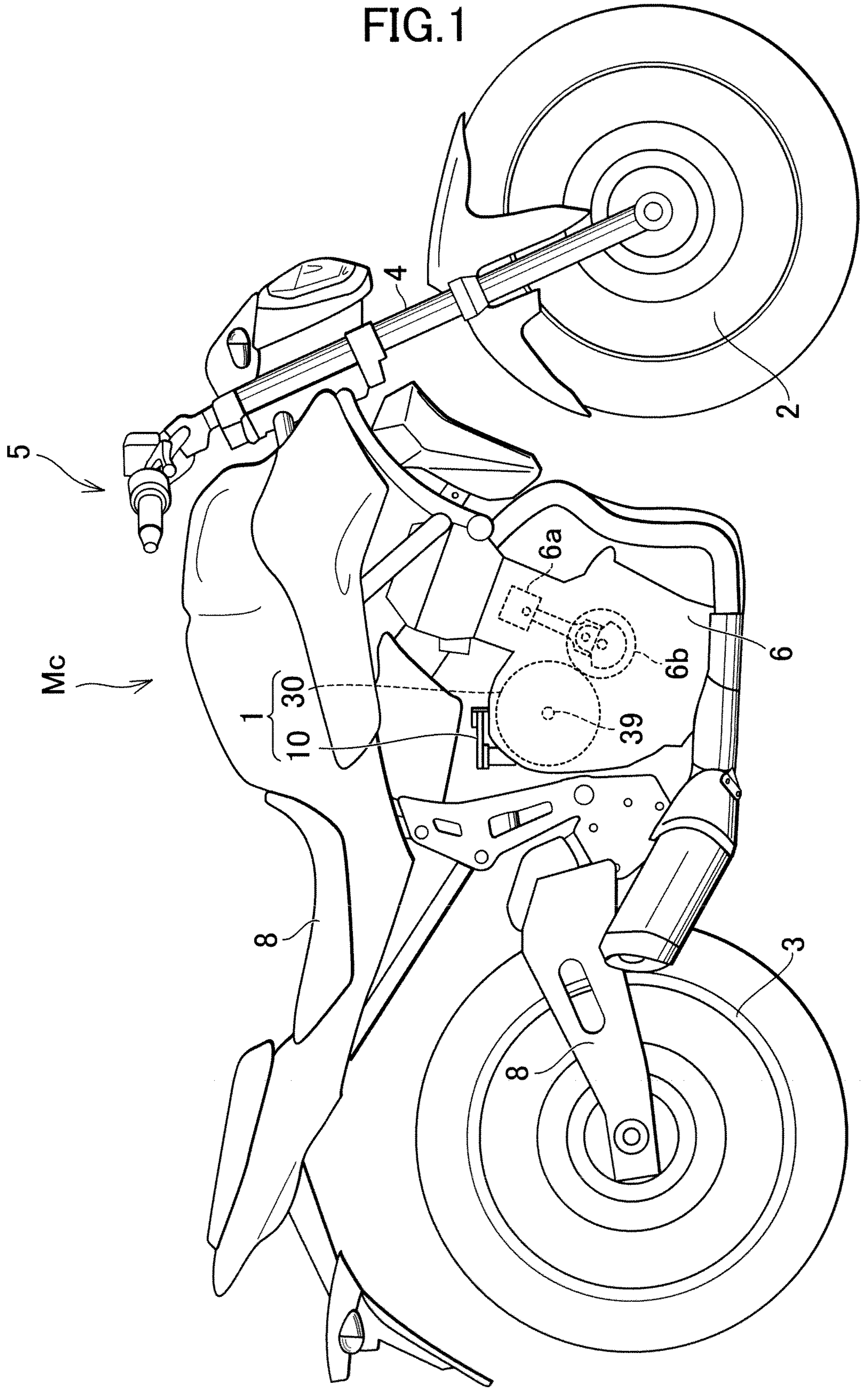

FIG.2

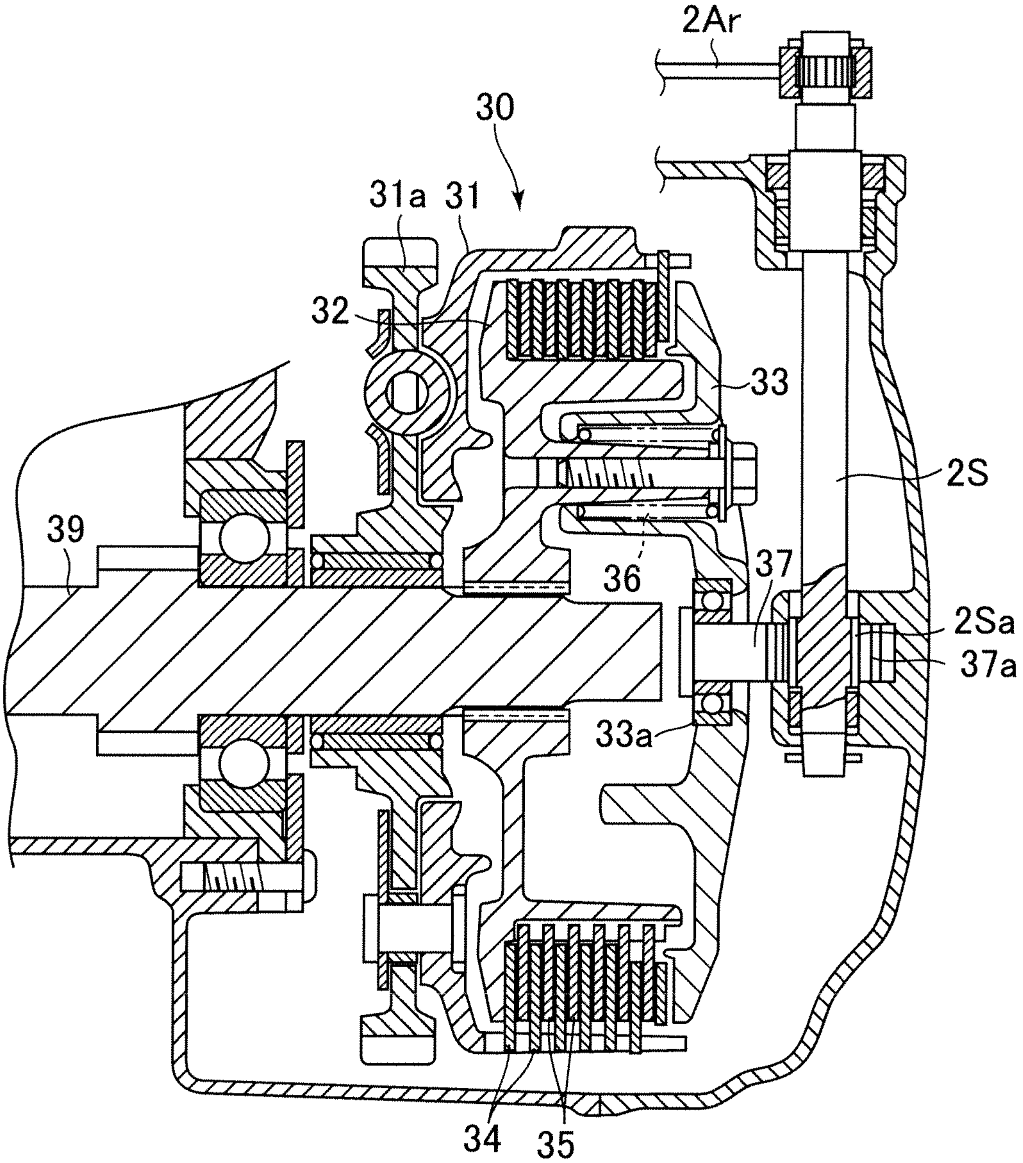

FIG.3

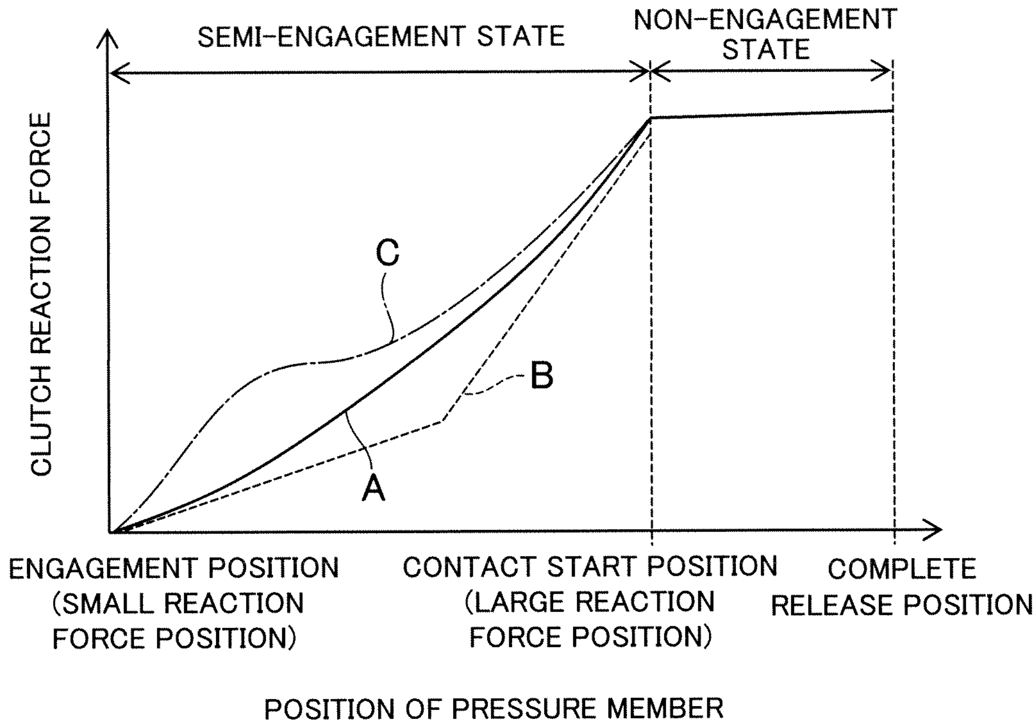
SEMI-ENGAGEMENT STATE
NON-ENGAGEMENT STATE
CLUTCH REACTION FORCE
C
B
A
ENGAGEMENT POSITION (SMALL REACTION FORCE POSITION)
CONTACT START POSITION (LARGE REACTION FORCE POSITION)
COMPLETE RELEASE POSITION
POSITION OF PRESSURE MEMBER

FIG.4

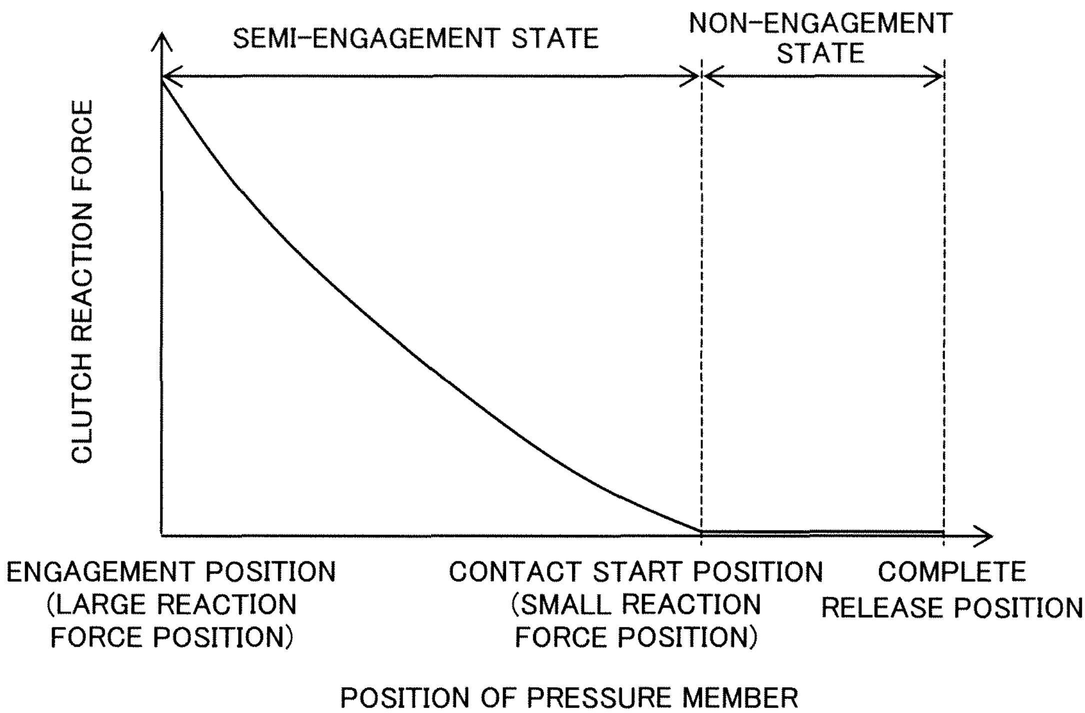
SEMI-ENGAGEMENT STATE
NON-ENGAGEMENT STATE
CLUTCH REACTION FORCE
ENGAGEMENT POSITION (LARGE REACTION FORCE POSITION)
CONTACT START POSITION (SMALL REACTION FORCE POSITION)
COMPLETE RELEASE POSITION
POSITION OF PRESSURE MEMBER

FIG.5

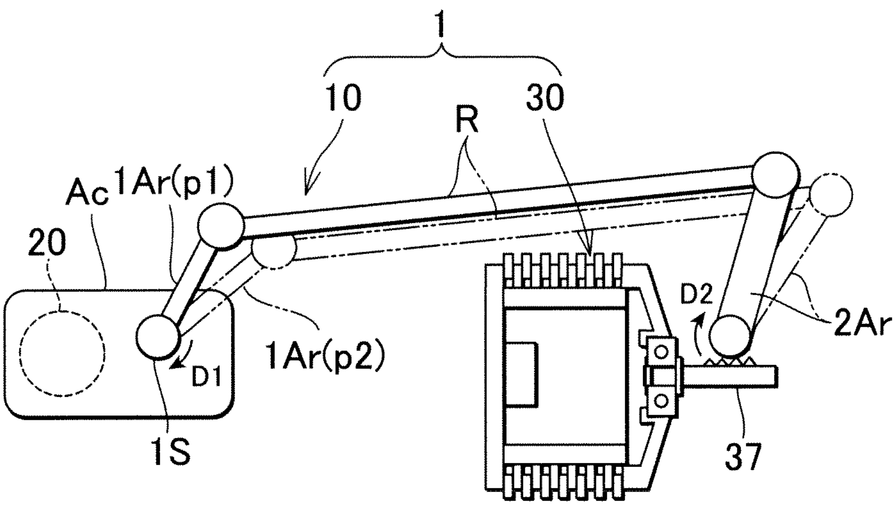

FIG.6

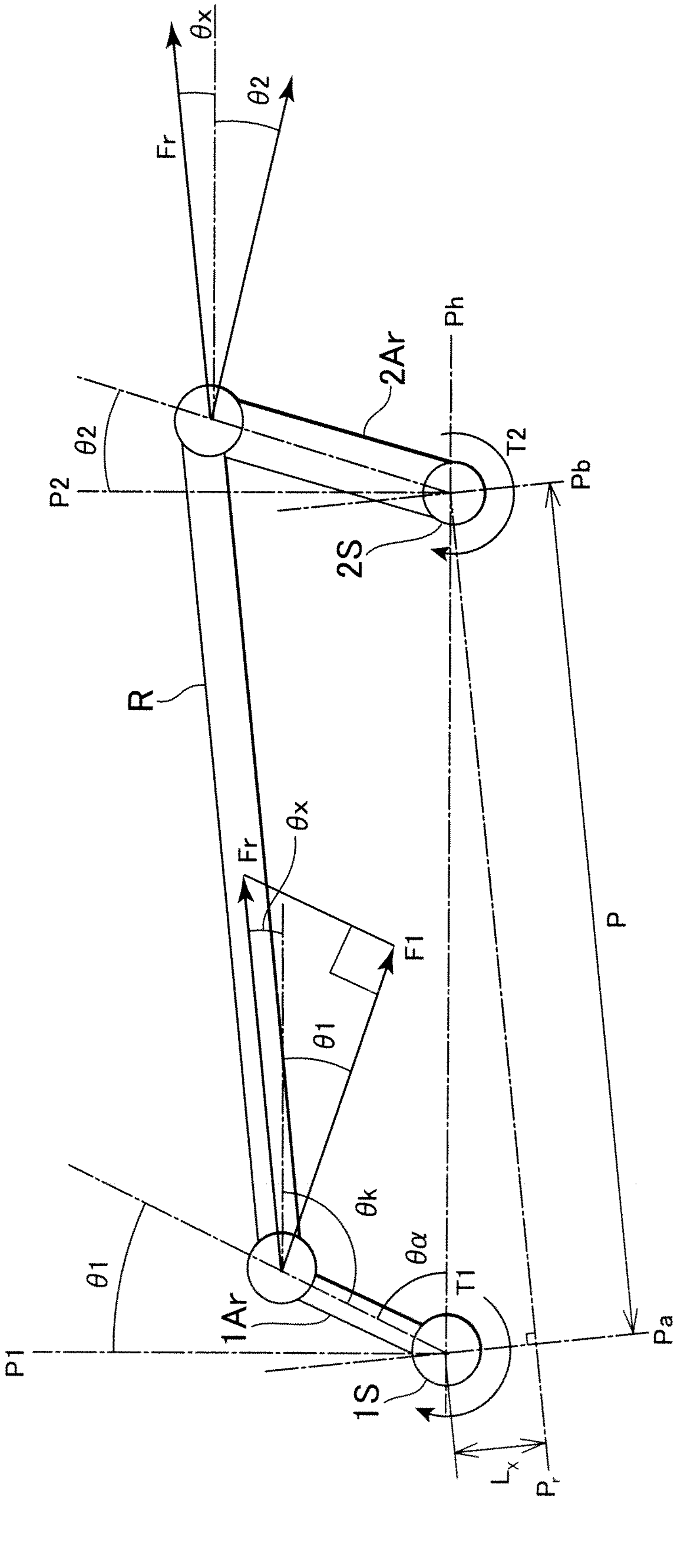
θx
θ2
Fr
Ph
2Ar
θ2
T2
P2
Pb
2S
R
θx
Fr
F1
P
θ1
θk
θα
θ1
T1
1Ar
Pa
P1
1S
Lx
Pr

FIG.7

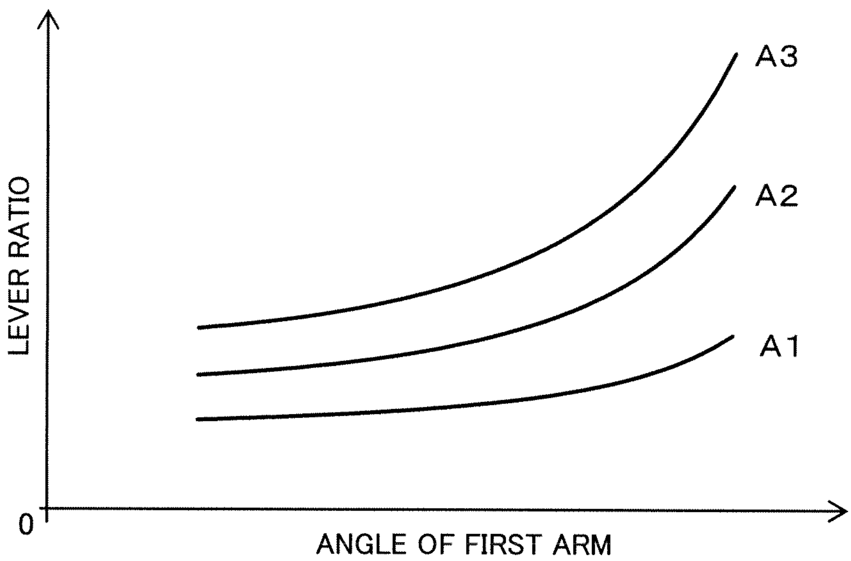

FIG.8A

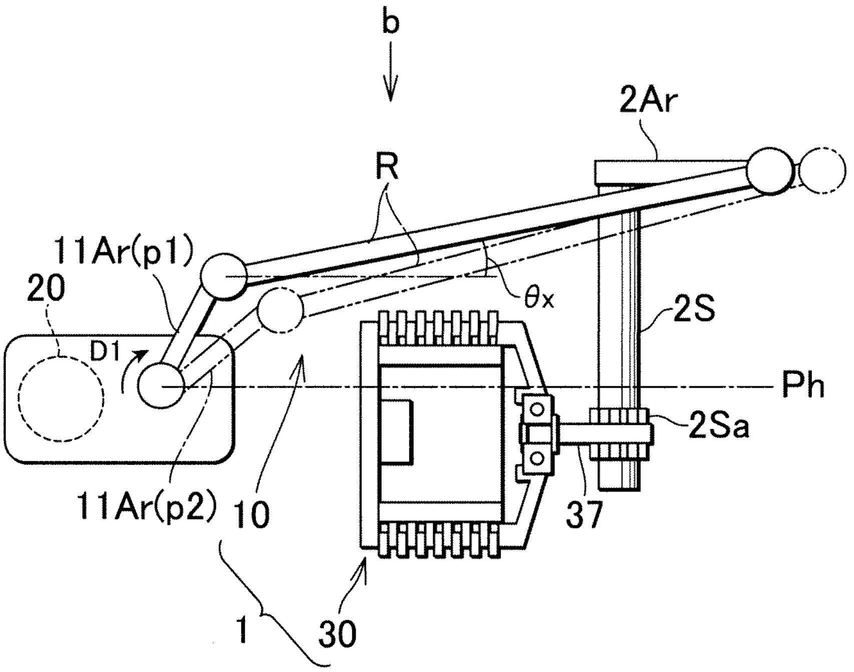
b
2Ar
R
11Ar(p1)
20
θx
2S
D1
Ph
2Sa
11Ar(p2)
10
37
1
30

FIG.8B

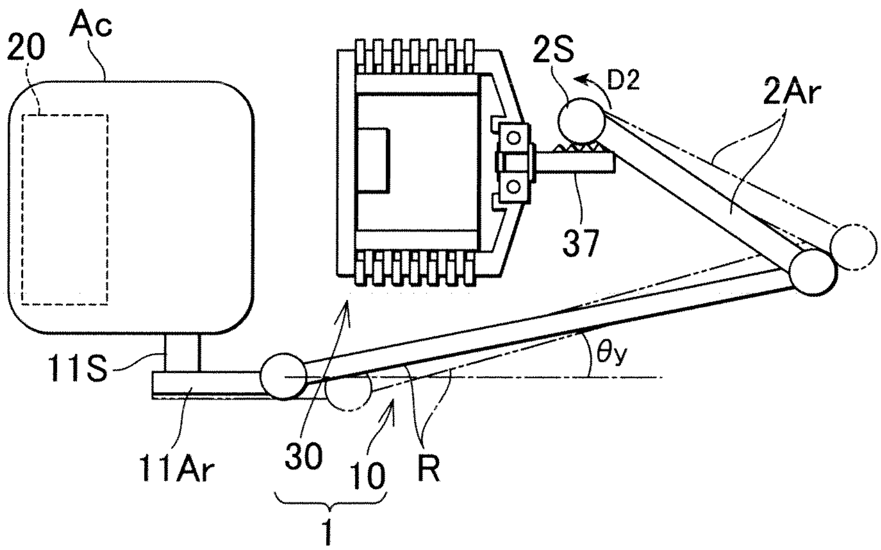
Ac
20
2S
D2
2Ar
37
θy
11S
11Ar
30
10
R
1

FIG.9A

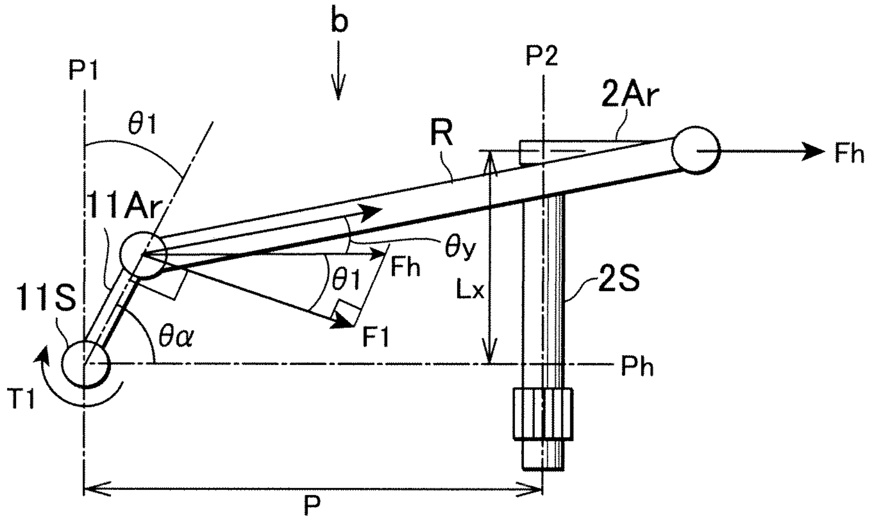
b
P1
P2
θ1
2Ar
R
Fh
11Ar
θy
Fh
θ1
Lx
2S
11S
θα
F1
Ph
T1
P

FIG.9B

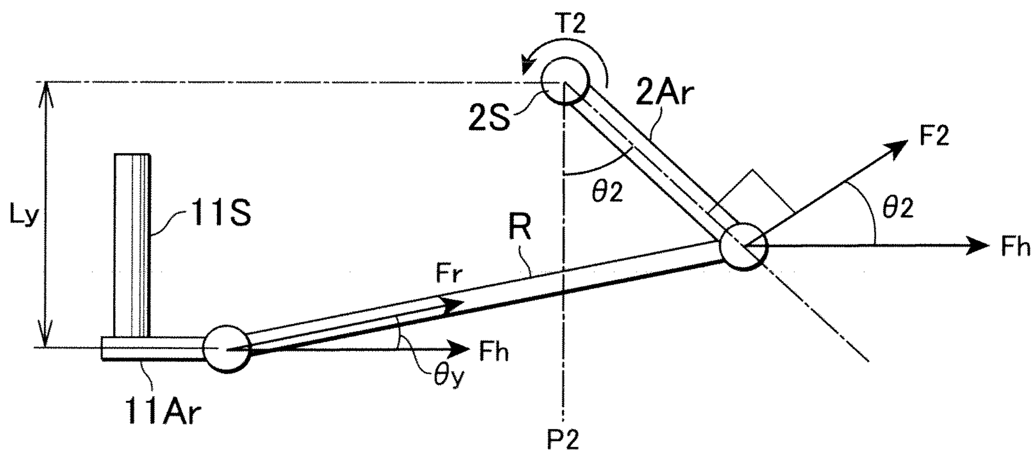
T2
2Ar
2S
F2
Ly
θ2
θ2
11S
R
Fh
Fr
Fh
θy
11Ar
P2

FIG.10

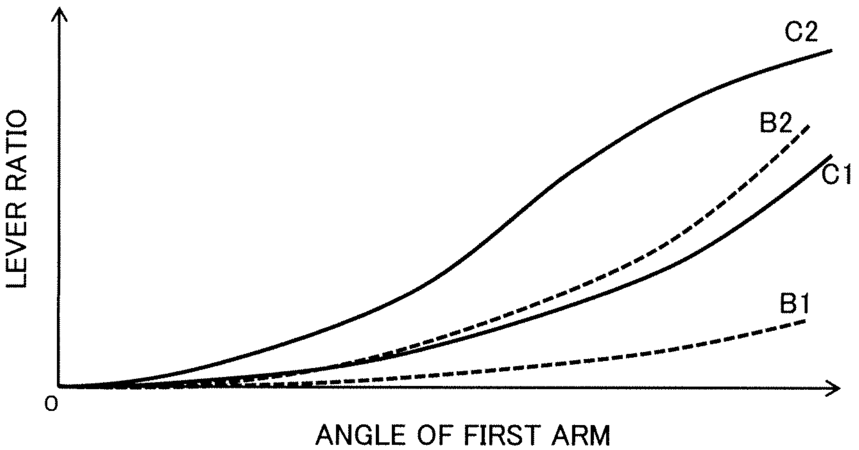

FIG.11

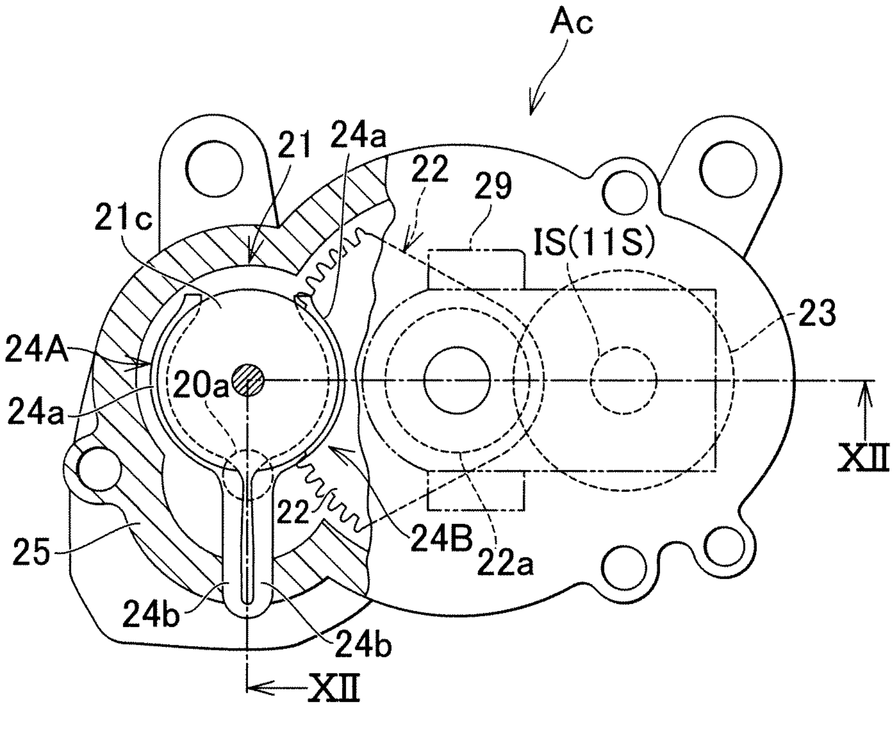
Ac
21
24a
22
29
21c
IS(11S)
23
24A
20a
24a
XII
22
25
24B
22a
24b
24b
XII

FIG.12

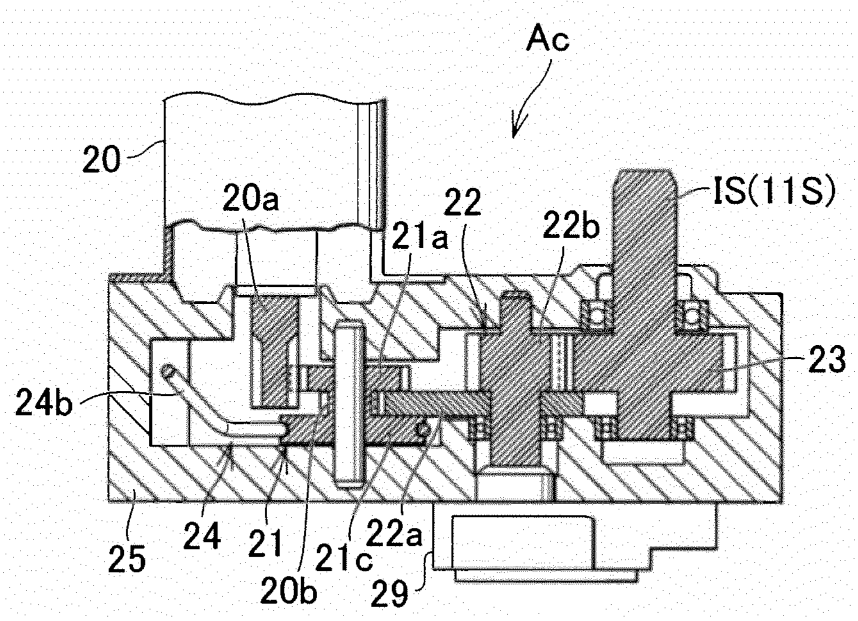

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20050072648 A1
- WO 2006004008 A